# EUROPEAN PATENT SPECIFICATION

(11) **EP 4 496 383 B1**
(45) Date of publication and mention of the grant of the patent: **06.05.2026**
(21) Application number: 22934243.1
(22) Date of filing: 31.03.2022
(51) Int. Cl.: H04W 40/22, H04W 76/14, H04W 76/11, H04W 76/19, H04W 84/12, H04W 88/04

(54) **CONNECTING VIA A NON 3GPP PROTOCOL A TERMINAL TO A RELAY TERMINAL AND CONNECTING THE RELAY TERMINAL TO A NETWORK VIA A 3GPP PROTOCOL**
VERBINDUNG EINES ENDGERÄTS ÜBER EIN NICHT-3GPP-PROTOKOLL MIT EINEM RELAIS-ENDGERÄT UND VERBINDUNG DES RELAIS-ENDGERÄTS ÜBER EIN 3GPP-PROTOKOLL MIT EINEM NETZWERK
CONNEXION D'UN TERMINAL À UN TERMINAL RELAIS VIA UN PROTOCOLE NON 3GPP ET CONNEXION DU TERMINAL RELAIS À UN RÉSEAU VIA UN PROTOCOLE 3GPP

(43) Date of publication of application: 22.01.2025
(60) Divisional application: 26168496.3
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); ZHANG, Boyuan, Dongguan, Guangdong 523860 (CN); LENG, Bingxue, Dongguan, Guangdong 523860 (CN)
(74) Representative: RGTH
(86) International application number: PCT/CN2022/084570
(87) International publication number: WO 2023/184405

(56) References cited:
- WO-A1-2021/143464
- CN-A- 109 479 221
- CN-A- 111 034 334
- CN-A- 113 491 162
- CN-A- 113 498 142
- CN-A- 113 711 641
- US-A1- 2018 310 293
- US-A1- 2019 159 018
- US-A1- 2020 077 460
- "3rd Generation Partnership Project; Technical Specification Group Radio Access Network; Evolved Universal Terrestrial Radio Access (E-UTRA); Radio Resource Control (RRC); Protocol specification (Release 16)", vol. RAN WG2, no. V16.7.0, 23 December 2021 (2021-12-23), pages 1 - 1092, XP052083396, Retrieved from the Internet <URL:https://ftp.3gpp.org/Specs/archive/36_series/36.331/36331-g70.zip 36331-g70.docx> [retrieved on 20211223]

## Description

### TECHNICAL FIELD

Embodiments of the present application relate to the field of communications, and in particular, to a wireless communication method, a network device, and a terminal device.

### BACKGROUND

In some scenarios, a remote terminal may be connected to a network via multiple paths. For example, the remote terminal may be directly connected to the network and connected to the network via a relay terminal.

In the related art, connections between the remote terminal and the relay terminal are based on interfaces defined by the 3rd generation partnership project (3rd Generation Partnership Project, 3GPP) protocol, such as a PC5 interface. In practical applications, the remote UE and the relay UE may also be connected by using an interface defined by a non-3GPP protocol, such as a wired connection, a wireless local area network (Wireless LAN, WLAN) connection, a blue tooth (Blue Tooth, BT) connection, etc.

Therefore, in a multi-path relay system based on an interface defined by the non-3GPP protocol, how to perform connection management is an urgent problem to be solved. US 2019/159018 A1, US 2020/077460 A1 and 3GPP TS 36.331 V16.7.0 form part of the related prior art.

### SUMMARY

The invention is carried out according to the appended independent claims.

Optional features of the invention are carried out according to the dependent claims.

The present application provides a wireless communication method, a network device and a terminal device, and a remote device may implement connection management such as establishment, release, modification, or resumption of a relay connection, by the network device.

In a first aspect, a wireless communication method is provided, which includes: acquiring, by a network device, target information, where the target information is information related to a connection between a first terminal and a second terminal; where the first terminal and the second terminal are connected via a first interface, and the first interface is not an interface defined by a 3rd generation partnership project (3GPP) protocol.

In a second aspect, a wireless communication method is provided, and applied to a first terminal, where the first terminal and a second terminal are connected via a first interface, and the first interface is not an interface defined by a 3rd generation partnership project (3GPP) protocol, and the method includes:
transmitting, by the first terminal, first information to a network device, where the first information is information related to a connection between the first terminal and the second terminal.

In a third aspect, a wireless communication method is provided, and applied to a second terminal, where the second terminal and a first terminal are connected via a first interface, the first interface is not an interface defined by a 3rd generation partnership project (3GPP) protocol, and the method includes:
transmitting, by the second terminal, second information to a network device, where the second information is information related to a connection between the first terminal and the second terminal.

In a fourth aspect, a network device is provided, and configured to perform the method in the above first aspect or any possible implementation of the above first aspect. Specifically, the network device includes a unit configured to perform the method in the above first aspect or any possible implementation of the above first aspect.

In a fifth aspect, a terminal device is provided, and configured to perform the method in the above second aspect or any possible implementation of the above second aspect. Specifically, the terminal device includes a unit configured to perform the method in the above second aspect or any possible implementation of the above second aspect.

In a sixth aspect, a terminal device is provided, and configured to perform the method in the above third aspect or any possible implementation of the above third aspect. Specifically, the terminal device includes a unit configured to perform the method in the above third aspect or any possible implementation of the above third aspect.

In a seventh aspect, a network device is provided, and the network device includes: a processor and a memory. The memory is configured to store a computer program, and the processor is configured to invoke and execute the computer program stored in the memory, to perform the method in the above first aspect or various implementations thereof.

In an eighth aspect, a terminal device is provided, and the terminal device includes: a processor and a memory. The memory is configured to store a computer program, and the processor is configured to invoke and execute the computer program stored in the memory, to perform the method in the above second aspect or various implementations thereof.

In a ninth aspect, a terminal device is provided, and the terminal device includes: a processor and a memory. The memory is configured to store a computer program, and the processor is configured to invoke and execute the computer program stored in the memory, to perform the method in the above third aspect or various implementations thereof.

In a tenth aspect, a chip is provided, and configured to implement the method in any one of the above first to third aspects or various implementations thereof.

Specifically, the chip includes: a processor configured to invoke and execute a computer program from a memory, to cause a device equipped with the chip to perform the method in any one of the above first to third aspects or various implementations thereof.

In an eleventh aspect, a computer-readable storage medium is provided, and configured to store a computer program, where the computer program causes a computer to perform the method in any one of the above first to third aspects or various implementations thereof.

In a twelfth aspect, a computer program product is provided, and includes computer program indications, where the computer program indications cause a computer to perform the method in any one of the above first to third aspects or various implementations thereof.

In a thirteenth aspect, a computer program is provided, and the computer program, when executed on a computer, causes the computer to perform the method in any one of the above first to third aspects or various implementations thereof.

Based on the above technical solutions, the network device may acquire connection-related information between the remote UE and the relay UE, and further, the network device may manage the connection between the remote UE and the network device based on the connection-related information, such as establishing a relay connection between the remote UE and the network device, or modifying, releasing or releasing the relay connection between the remote UE and the network device.

### BRIEF DESCRIPTION OF THE DRAWINGS

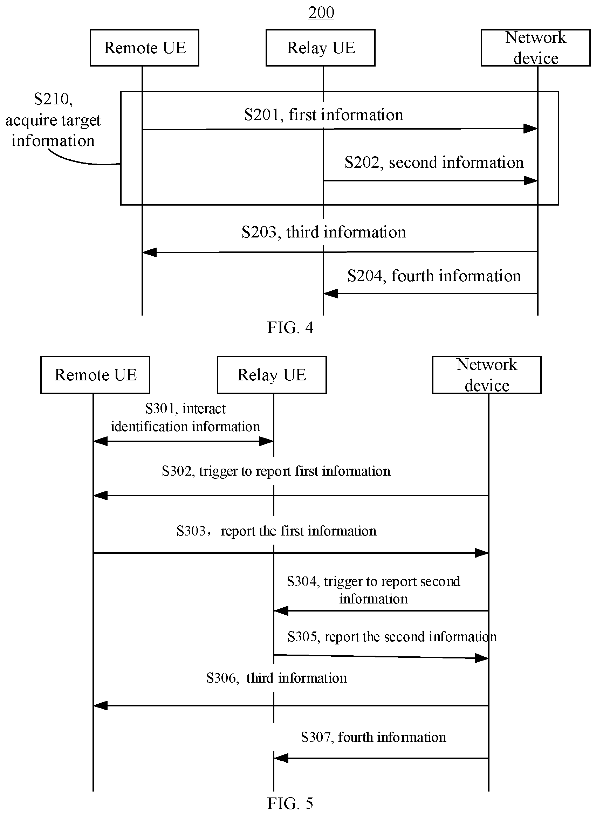

In the following, figures 4 (Step 210), 7 and 8 and their description are according to the claimed invention. The remaining description does not or does not fully correspond to the claimed invention but is useful for understanding the invention.
FIG. 1 is a schematic diagram of a communication system architecture provided by the embodiments of the present application.
FIG. 2 is a schematic diagram of a transmission protocol stack in a 5G system.
FIG. 3 is a schematic diagram of a connection between a terminal device and a network device.
FIG. 4 is a schematic diagram of a wireless communication method, provided according to the embodiments of the present application.
FIG. 5 is a schematic interaction diagram of a wireless communication method, according to one embodiment of the present application.
FIG. 6 is a schematic interaction diagram of a wireless communication method, according to another embodiment of the present application.
FIG. 7 is a schematic block diagram of a network device, provided according to the embodiments of the present application.
FIG. 8 is a schematic block diagram of a terminal device, provided according to the embodiments of the present application.
FIG. 9 is a schematic block diagram of another terminal device, provided according to the embodiments of the present application.
FIG. 10 is a schematic block diagram of a communication device, provided according to the embodiments of the present application.
FIG. 11 is a schematic block diagram of a chip, provided according to the embodiments of the present application.
FIG. 12 is a schematic block diagram of a communication device, provided according to the embodiments of the present application.

### DETAILED DESCRIPTION

Technical solutions in the embodiments of the present application will be described below, in conjunction with the drawings of the embodiments of the present application. Obviously, the described embodiments are merely some but not all of the embodiments of the present application. All other embodiments obtained based on the embodiments of the present application by those ordinary skilled in the art without paying creative efforts shall be included in the protection scope of the present application.

The technical solutions of the embodiments of the present application may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present application may also be applied to these communication systems.

Optionally, the communication system in the embodiments of the present application may be applied to a carrier aggregation (CA) scenario, may also be applied to a dual connectivity (DC) scenario, and may also be applied to a standalone (SA) network deployment scenario.

Optionally, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STATION, STA) in the WLAN, may be a cellular phone, a cordless phone, a Session Initiation Protocol (SIP) phone, a Wireless Local Loop (WLL) station, or a personal digital assistant (PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present application, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.).

In the embodiments of the present application, the terminal device may be a mobile phone, a pad, a computer with a wireless transceiver function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present application, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the application, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device or a base station (gNB) in an NR network, or a network device in the PLMN network evolved in the future or a network device in the NTN network, etc.

As an example but not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places.

In the embodiments of the present application, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc., these small cells have characteristics of small coverage range and low transmission power, which are applicable for providing a data transmission service with high speed.

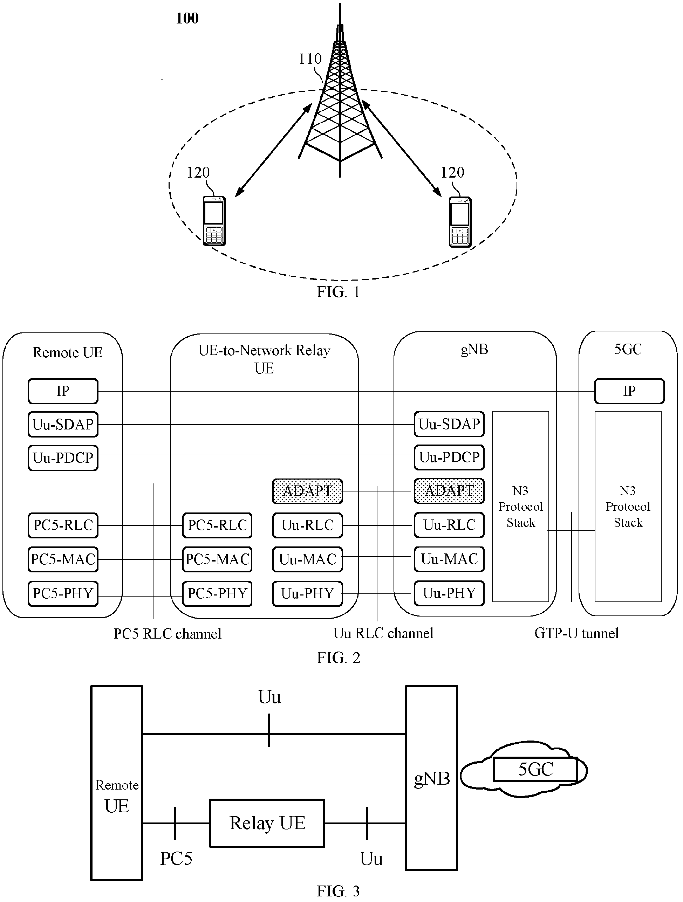

Exemplarily, the communication system 100 applied by the embodiments of the present application is shown in FIG. 1. The communication system 100 may include a network device 110, and the network device 110 may be a device that communicates with a terminal device 120 (also referred to as a communication terminal or a terminal). The network device 110 may provide communication coverage for a specific geographical area and may communicate with a terminal device located within the coverage area.

FIG. 1 exemplarily shows one network device and two terminal devices, and optionally, the communication system 100 may include a plurality of network devices and may include another number of terminal devices within a coverage range of each network device, the embodiments of the present application are not limited thereto.

Optionally, the communication system 100 may also include other network entities such as a network controller and a mobility management entity, etc., which are not limited to the embodiments of the present application.

It should be understood that, in the embodiments of the present application, a device with a communication function in the network/system may be referred to as a communication device. Taking the communication system 100 shown in FIG. 1 as an example, the communication device may include the network device 110 and the terminal device 120 with the communication function, and the network device 110 and the terminal device 120 may be the specific devices described above, which will not be repeated herein; the communication device may also include other devices in the communication system 100, such as a network controller, a mobility management entity, and other network entities, which are not limited in the embodiments of the present application.

It should be understood that the terms herein "system" and "network" are often used interchangeably herein. The term herein "and/or" is only an association relationship to describe associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

It should be understood that the "indication" mentioned in the embodiments of the present application may be a direct indication, may also be an indirect indication, or may also represent having an association relationship. For example, A indicates B, which may mean that A directly indicates B, for example, B may be acquired by A; may also mean that A indirectly indicates B, for example, A indicates C, and B may be acquired by C; or may also mean that there is an association relationship between A and B.

In the description of the embodiments of the present application, the term "correspondence" may mean that there is a direct correspondence or indirect correspondence between the two, it may also mean that there is an associated relationship between the two, or it may also mean a relationship of indicating and being indicated or a relationship of configuring and being configured, etc.

In the embodiments of the present application, "predefined" may be implemented by pre-saving corresponding codes, tables or other manners that may be used for indicating related information, in the device (for example, including the terminal device and the network device), and the present application does not limit its specific implementation. For example, the predefined may refer to what is defined in a protocol.

In the embodiments of the present application, the "protocol" may refer to a standard protocol in the field of communication, which may include, for example, an LTE protocol, an NR protocol, and related protocols applied in the future communication system, and the present application is not limited thereto.

In some scenarios, a layer 2-based UE-to-Network relay UE is introduced, and the UE-to-Network relay UE may connect directly to the network. Specifically, the remote terminal is connected to an access network (e.g., gNB) and a core network (CN) (e.g., 5GC) via the UE-to-Network relay UE.

FIG. 2 illustrates a schematic diagram of a transmission protocol stack of a 5G system, specifically involving a remote UE, a layer 2 UE-to-Network relay UE, a gNB, and a 5GC. As shown in FIG. 2, the remote UE may include the following layers: internet protocol (IP), Uu-service data adaptation protocol (SDAP), Uu-packet data convergence protocol (PDCP), PC5-radio link control (RLC), PC5-media access control (MAC), PC5-physics (PHY). The UE-to-Network relay UE may include the following layers: adaptation (ADAPT), PC5-RLC, PC5-MAC, PC5-PHY, Uu-RLC, Uu-MAC, and Uu-PHY. The gNB may include the following layers: Uu-SDAP, Uu-PDCP, ADAPT, Uu-RLC, Uu-MAC, Uu-PHY, and N3 protocol stack. The 5GC may include the following layers: IP, and N3 protocol stack.

As shown in FIG. 2, the adaptation layer (ADAPT) of the relay UE is set above a control plane and user plane RLC layer of the Uu interface between the relay UE and the gNB. The Uu-SDAP, Uu-PDCP and radio resource control (RRC) are terminated between the remote UE and the gNB, and the RLC, MAC and PHY are terminated in each link (including a link between the remote UE and the relay UE and a link between the relay UE and the gNB).

In some embodiments, the link between the relay UE and the network may be called a Uu link, a Uu path; a direct link between the remote UE and the network may also be called a Uu link, a Uu path; and the link between the remote UE and the relay UE may be called a PC5 link, a PC5 path.

For the uplink of the L2 UE-to-Network relay UE

The adaptation layer of the relay UE supports uplink bearer mapping between access PC5 RLC channels, which is used to perform the transmission and reception of Uu channel on the Uu path between the relay UE and the network. For relay services of the uplink, different end-to-end bearers (e.g., signaling radio bearers (SRBs)), data radio bearers (DRBs)) of the same remote UE and/or different remote UEs may be mapped with N:1 and be data-multiplexed on a Uu RLC channel.

The adaptation layer of the relay UE includes identification information of the remote terminal of an uplink service to be relayed and identification information of a radio bearer of the remote terminal, so that the gNB correlates the received data packets of a specific packet data convergence protocol (PDCP) entity associated with the radio bearer of the remote terminal.

For the downlink of the L2 UE-to-Network relay UE:

The adaptation layer of the relay UE may be used to support downlink bearer mapping at the gNB, to map an end-to-end radio bearer (e.g., SRB, DRB) of the remote terminal to a Uu RLC channel via the Uu path between the relay UE and the network. The adaptation layer of the relay UE may be used to support downlink N:1 bearer mapping and data multiplexing between multiple end-to-end radio bearers (e.g., SRBs, DRBs) of the remote UE and/or different remote UEs and a Uu RLC channel on the Uu path between the relay UE and the network.

The adaptation layer of the relay UE includes identification information of the remote terminal of the downlink service to be relayed. The identification information of the radio bearer of the remote terminal and the identification information of the remote terminal need to be placed in the adaptation layer of the relay UE by the gNB, so that the relay UE maps the data packet received from the radio bearer of the remote terminal to the PC5 RLC channel associated with the radio bearer.

In some scenarios, the remote UE may be connected to the network via multiple paths, for example, the multiple paths include a direct path between the remote UE and the network, and a relay path that connects to the network via the relay UE.

For example, as shown in FIG. 3, the remote UE may be connected to the network device via the relay UE and directly connected to the network device via the Uu interface. Herein, the remote UE and the relay UE are connected and communicated via the PC5 interface, and the relay UE and the network device are connected and communicated via the Uu interface. In some scenarios, if multi-hop relay UEs exist, the relay UEs are connected and communicated via the PC5 interface, and the last-hop relay UE and the network device are connected and communicated via the Uu interface.

In the related art, the connection between the remote UE and the relay UE is based on an interface defined by the 3rd generation partnership project (3GPP) protocol, such as the PC5 interface.

In actual applications, the remote UE and the relay UE may also be connected by using an interface defined by a non-3GPP protocol, such as a wired connection, a wireless local area network (Wireless LAN, WLAN) connection, a blue tooth (Blue Tooth, BT) connection, etc.

Therefore, in a multi-path relay system based on the interface defined by the non-3GPP protocol, how to perform connection management is an urgent problem to be solved.

To facilitate the understanding of the technical solutions in the embodiments of the present application, the technical solutions of the present application are described in detail below through specific embodiments. The above related technologies, as optional solutions, may be arbitrarily combined with the technical solutions of the embodiments of the present application, and those combined solutions all fall within the protection scope of the embodiments of the present application. The embodiments of the present application include at least a part of the following contents.

In the embodiments, a wireless communication method is provided, which includes:
acquiring, by a network device, target information, where the target information is information related to a connection between a first terminal and a second terminal;
where the first terminal and the second terminal are connected via a first interface, and the first interface is not an interface defined by a 3rd generation partnership project (3GPP) protocol.

In some embodiments, the target information includes at least one of the following information:
identification information of the first terminal;
identification information of the second terminal;
type information of the connection between the first terminal and the second terminal;
quality information of the connection between the first terminal and the second terminal;
identity type information of the first terminal;
identity type information of the second terminal; or
target indication information, which is used to indicate that a radio link failure (RLF) occurs in the connection between the first terminal and the second terminal.

In some embodiments, the identification information of the first terminal includes at least one of:
a layer 2 identification (L2-ID) of the first terminal, media access control layer identification information (MAC-ID) of the first terminal, an MAC layer address of the first terminal, a cell radio network temporary identity (C-RNTI) of the first terminal, an inactive radio network temporary identity (I-RNTI) of the first terminal, or a 5G shorted temporary mobile subscriber identity code (5G-S-TMSI) of the first terminal.

In some embodiments, the identification information of the second terminal includes at least one of: an L2-ID of the second terminal, an MAC-ID of the second terminal, an MAC layer address of the second terminal, a C-RNTI of the second terminal, an I-RNTI of the second terminal, or a 5G-S-TSMI of the second terminal.

In some embodiments, the type information of the connection between the first terminal and the second terminal includes at least one of:
a wired connection, a wireless local area network (WLAN) connection, or a blue tooth (BT) connection.

In some embodiments, the quality information of the connection between the first terminal and the second terminal includes at least one of:
reference signal receiving power (RSRP), reference signal receiving quality (RSRQ), signal to interference plus noise ratio (SINR), channel quality indicator (CQI), or received signal strength indication (RSSI).

In some embodiments, the identity type information of the first terminal includes at least one of: an anchor terminal, or a remote terminal.

In some embodiments, the identity type information of the second terminal includes at least one of: an assisting terminal, or a relay terminal.

In some embodiments, acquiring, by the network device, the target information, includes:
receiving, by the network device, first information transmitted by the first terminal, where the first information is information related to the connection between the first terminal and the second terminal; and/or
receiving, by the network device, second information transmitted by the second terminal, where the second information is information related to the connection between the first terminal and the second terminal;
where the target information is determined according to the first information and/or the second information.

In some embodiments, the first information includes at least one of:
identification information of the first terminal;
identification information of the second terminal;
type information of the connection between the first terminal and the second terminal;
quality information of the connection between the first terminal and the second terminal;
identity type information of the first terminal; or
first indication information, which is used to indicate that an RLF occurs in the connection between the first terminal and the second terminal.

In some embodiments, the second information includes at least one of:
identification information of the first terminal;
identification information of the second terminal;
type information of the connection between the first terminal and the second terminal;
quality information of the connection between the first terminal and the second terminal;
identity type information of the second terminal; or
second indication information, which is used to indicate that an RLF occurs in the connection between the first terminal and the second terminal.

In some embodiments, target indication information in the target information is determined according to first indication information in the first information and/or second indication information in the second information.

In some embodiments, the first information is transmitted by the first terminal itself, or
the first information is transmitted by the first terminal based on an indication of the network device; or
the first information is transmitted in a case where an RLF occurs in the connection between the first terminal and the second terminal.

In some embodiments, the first information is carried by at least one of the following signaling:
terminal assistance information (UEAssistanceInformation), sidelink terminal information (SidelinkUEinformation), a terminal information response (UEInformationResponse), a measurement report message, or failure information (failureInformation).

In some embodiments, the indication of the network device is carried by a terminal information request (UEInformationRequest) and/or a measurement configuration message.

In some embodiments, the occurrence of the RLF in the connection between the first terminal and the second terminal is determined by at least one of a packet data convergence protocol (PDCP) layer, a PC5-RRC layer or a PC5-S layer of the first terminal.

In some embodiments, the second information is transmitted by the second terminal itself, or
the second information is transmitted by the second terminal based on an indication of the network device; or
the second information is transmitted in a case where an RLF occurs in the connection between the first terminal and the second terminal.

In some embodiments, the second information is carried by at least one of the following signaling:
terminal assistance information (UEAssistanceInformation), sidelink terminal information (SidelinkUEinformation), a terminal information response (UEInformationResponse), measurement report information, or failure information (failureInformation).

In some embodiments, the indication of the network device is carried by a terminal information request (UEInformationRequest) and/or measurement configuration information.

In some embodiments, the occurrence of the RLF in the connection between the first terminal and the second terminal is determined by at least one of a PDCP layer, a PC5-RRC layer or a PC5-S layer of the second terminal.

In some embodiments, the first information is used to establish, modify, release or resume a relay connection between the first terminal and the network device.

In some embodiments, the second information is used to establish, modify, release or resume a relay connection between the first terminal and the network device.

In some embodiments, the method further includes:
transmitting, by the network device, third information to the first terminal, where the third information is used to establish, modify, release or resume a relay connection between the first terminal and the network device.

In some embodiments, the third information includes at least one of:
identification information of the second terminal;
index information of first information, where the index information is used to indicate the first information; or
first configuration information, which is used to configure a transmission performed via the relay connection between the first terminal and the network device.

In some embodiments, the first configuration information is used to configure a target bearer, where the transmission corresponding to the target bearer is performed via the relay connection.

In some embodiments, the third information is determined according to the target information.

In some embodiments, the method further includes:
transmitting, by the network device, fourth information to the second terminal, where the fourth information is used to establish, modify, release or resume a relay connection between the first terminal and the network device.

In some embodiments, the fourth information includes at least one of:
identification information of the first terminal;
index information of second information, where the index information is used to indicate the second information; or
second configuration information, which is used to configure a transmission performed via the relay connection between the first terminal and the network device.

In some embodiments, the second configuration information is used to configure a target Uu radio link control (RLC) channel, where the transmission corresponding to the target Uu RLC channel is performed via the relay connection.

In some embodiments, the fourth information is determined according to the target information.

In the embodiments, a wireless communication method is provided, which is applied to a first terminal, where the first terminal and a second terminal are connected via a first interface, the first interface is not an interface defined by a 3rd generation partnership project (3GPP) protocol, and the method includes:
transmitting, by the first terminal, first information to a network device, where the first information is information related to a connection between the first terminal and the second terminal.

In some embodiments, the first information includes at least one of:
identification information of the first terminal;
identification information of the second terminal;
type information of the connection between the first terminal and the second terminal;
quality information of the connection between the first terminal and the second terminal;
identity type information of the first terminal; or
first indication information, which is used to indicate that a radio link failure (RLF) occurs in the connection between the first terminal and the second terminal.

In some embodiments, the identification information of the first terminal includes at least one of:
a layer 2 identification (L2-ID) of the first terminal, media access control layer identification information (MAC-ID) of the first terminal, an MAC layer address of the first terminal, a cell radio network temporary identity (C-RNTI) of the first terminal, an inactive radio network temporary identity (I-RNTI) of the first terminal, or a 5G shorted temporary mobile subscriber identity code (5G-S-TSMI) of the first terminal.

In some embodiments, the identification information of the second terminal includes at least one of: an L2-ID of the second terminal, an MAC-ID of the second terminal, an MAC layer address of the second terminal, a C-RNTI of the second terminal, an I-RNTI of the second terminal, or a 5G-S-TSMI of the second terminal.

In some embodiments, the type information of the connection between the first terminal and the second terminal includes at least one of:
a wired connection, a wireless local area network (WLAN) connection, or a blue tooth (BT) connection.

In some embodiments, the quality information of the connection between the first terminal and the second terminal includes at least one of:
reference signal receiving power (RSRP), reference signal receiving quality (RSRQ), signal to interference plus noise ratio (SINR), channel quality indicator (CQI), or received signal strength indication (RSSI).

In some embodiments, the identity type information of the first terminal includes at least one of: an anchor terminal, or a remote terminal.

In some embodiments, the first information is transmitted by the first terminal itself, or
the first information is transmitted by the first terminal based on an indication of the network device; or
the first information is transmitted in a case where an RLF occurs in the connection between the first terminal and the second terminal.

In some embodiments, the first information is carried by at least one of the following signaling:
terminal assistance information (UEAssistanceInformation), sidelink terminal information (SidelinkUEinformation), a terminal information response (UEInformationResponse), measurement report information, or failure information (failureInformation).

In some embodiments, the indication of the network device is carried by a terminal information request (UEInformationRequest) and/or measurement configuration information.

In some embodiments, the occurrence of the RLF in the connection between the first terminal and the second terminal is determined by at least one of a packet data convergence protocol (PDCP) layer, a PC5-RRC layer or a PC5-S layer of the first terminal.

In some embodiments, the method further includes:
receiving, by the first terminal, third information transmitted by the network device, where the third information is used to establish, modify, release or resume a relay connection between the first terminal and the network device.

In some embodiments, the third information includes at least one of:
identification information of the second terminal;
index information of the first information, where the index information is used to indicate the first information; or
first configuration information, which is used to configure a transmission performed via the relay connection between the first terminal and the network device.

In some embodiments, the first configuration information is used to configure a target bearer, where the transmission corresponding to the target bearer is performed via the relay connection.

In some embodiments, the method further includes:
transmitting, by the first terminal, identification information of the first terminal to the second terminal.

In some embodiments, the identification information of the first terminal is transmitted via at least one of a PC5-RRC signaling, a PC5-S signaling or an adaptation layer control protocol data unit (PDU).

In some embodiments, the method further includes:
receiving, by the first terminal, identification information of the second terminal transmitted by the second terminal.

In some embodiments, the identification information of the second terminal is transmitted via at least one of a PC5-RRC signaling, a PC5-S signaling or an adaptation layer control PDU.

In some embodiments, the first information is used to establish, modify, release or resume a relay connection between the first terminal and the network device.

In the embodiments, a wireless communication method is provides, which is applied to a second terminal, where the second terminal and a first terminal are connected via a first interface, the first interface is not an interface defined by a 3rd generation partnership project (3GPP) protocol, and the method includes:
transmitting, by the second terminal, second information to a network device, where the second information is information related to a connection between the first terminal and the second terminal.

In some embodiments, the second information includes at least one of:
identification information of the first terminal;
identification information of the second terminal;
type information of the connection between the first terminal and the second terminal;
quality information of the connection between the first terminal and the second terminal;
identity type information of the second terminal; or
second indication information, which is used to indicate that an RLF occurs in the connection between the first terminal and the second terminal.

In some embodiments, the identification information of the first terminal includes at least one of:
a layer 2 identification (L2-ID) of the first terminal, media access control layer identification information (MAC-ID) of the first terminal, an MAC layer address of the first terminal, a cell radio network temporary identity (C-RNTI) of the first terminal, an inactive radio network temporary identity (I-RNTI) of the first terminal, or a 5G shorted temporary mobile subscriber identity code (5G-S-TSMI) of the first terminal.

In some embodiments, the identification information of the second terminal includes at least one of: an L2-ID of the second terminal, an MAC-ID of the second terminal, an MAC layer address of the second terminal, a C-RNTI of the second terminal, an I-RNTI of the second terminal, or a 5G-S-TSMI of the second terminal.

In some embodiments, the type information of the connection between the first terminal and the second terminal includes at least one of:
a wired connection, a wireless local area network (WLAN) connection, or a blue tooth (BT) connection.

In some embodiments, the quality information of the connection between the first terminal and the second terminal includes at least one of:
reference signal receiving power (RSRP), reference signal receiving quality (RSRQ), signal to interference plus noise ratio (SINR), channel quality indicator (CQI), or received signal strength indication (RSSI).

In some embodiments, the identity type information of the second terminal includes at least one of: an assisting terminal, or a relay terminal.

In some embodiments, the second information is transmitted by the second terminal itself, or
the second information is transmitted by the second terminal based on an indication of the network device; or
the second information is transmitted in a case where an RLF occurs in the connection between the first terminal and the second terminal.

In some embodiments, the second information is carried by at least one of the following signaling:
terminal assistance information (UEAssistanceInformation), sidelink terminal information (SidelinkUEinformation), a terminal information response (UEInformationResponse), measurement report information, or failure information (failureInformation).

In some embodiments, the indication of the network device is carried by a terminal information request (UEInformationRequest) and/or measurement configuration information.

In some embodiments, the occurrence of the RLF in the connection between the first terminal and the second terminal is determined by at least one of a packet data convergence protocol (PDCP) layer, a PC5-RRC layer or a PC5-S layer of the second terminal.

In some embodiments, the method further includes:
receiving, by the second terminal, fourth information transmitted by the network device, where the fourth information is used to establish, modify, release or resume a relay connection between the first terminal and the network device.

In some embodiments, the fourth information includes at least one of:
identification information of the first terminal;
index information of the second information, where the index information is used to indicate the second information; or
second configuration information, which is used to configure a transmission performed via the relay connection between the first terminal and the network device.

In some embodiments, the second configuration information is used to configure a target Uu radio link control (RLC) channel, where the transmission corresponding to the target Uu RLC channel is performed via the relay connection.

In some embodiments, the method further includes:
receiving, by the second terminal, identification information of the first terminal transmitted by the first terminal.

In some embodiments, the identification information of the first terminal is transmitted via at least one of a PC5-RRC signaling, a PC5-S signaling or an adaptation layer control PDU.

In some embodiments, the method further includes:
transmitting, by the second terminal, identification information of the second terminal to the first terminal

In some embodiments, the identification information of the second terminal is transmitted via at least one of a PC5-RRC signaling, a PC5-S signaling or an adaptation layer control protocol data unit (PDU).

In some embodiments, the second information is used to establish, modify, release or resume a relay connection between the first terminal and the network device.

FIG. 4 is a schematic interaction diagram of a wireless communication method 200, according to the claimed invention.

As shown in FIG. 4, the method 200 includes:
S210, acquiring, by a network device, target information, where the target information is information related to a connection between a first terminal and a second terminal

In the claimed invention, the first terminal and the second terminal are connected via a first interface, and the first interface is not an interface defined by the 3GPP protocol.

In some embodiments, the first interface may include at least one of:
a wired interface, a WLAN interface, a WIFI interface, or a BT interface.

As an example but not a limitation, the information related to the connection between the first terminal and the second terminal may include at least one of:
quality related information of the connection, status information of the connection (such as whether an RLF occurs), type related information of the connection, information of devices corresponding to the connection, or identity information of devices corresponding to the connection.

In some embodiments, the target information is used to establish, modify, release or resume a relay connection between the first terminal and the network device.

It should be noted that in the embodiments of the present application, the relay connection may also be expressed as a relay link, a relay path, a non-direct connection, a non-direct link, a relay path, etc.

In the claimed invention, the relay connection includes a connection between the first terminal and the second terminal, and a connection between the second terminal and the network device.

In the claimed invention, the connection between the second terminal and the network device is the Uu connection. In other words, the second terminal and the network device is connected via an interface defined by the 3GPP protocol.

In the claimed invention, a direct connection defined by the 3GPP protocol has been established between the first terminal and the network device

In some embodiments, a direct connection defined by the 3GPP protocol has been established between the second terminal and the network device.

It should be noted that in the embodiments of the present application, the direct connection may also be expressed as a direct link, a direct path, a Uu connection, a Uu link, or a Uu path.

In some embodiments, the target information includes but is not limited to at least one of the following information:
identification information of the first terminal;
identification information of the second terminal;
type information of the connection between the first terminal and the second terminal;
quality information of the connection between the first terminal and the second terminal;
identity type information of the first terminal;
identity type information of the second terminal; or
target indication information, which is used to indicate that a radio link failure (RLF) occurs in the connection between the first terminal and the second terminal.

In some embodiments, the identification information of the first terminal may be a physical layer identification, or a layer 2 identification (L2-ID), or an MAC layer identification, or an MAC layer address of the first terminal, or other identification information that can uniquely identify the first terminal, which is not limited in the present application.

In some embodiments, the identification information of the first terminal includes at least one of:
a layer 2 identification (L2-ID) of the first terminal, media access control layer identification information (MAC-ID) of the first terminal, an MAC layer address of the first terminal, a radio network temporary identity (RNTI) of the first terminal, or a 5G shorted temporary mobile subscriber identity (5G-S-TMSI) of the first terminal.

In some embodiments, the identification information of the second terminal may be a physical layer identification, or an L2-ID, or an MAC layer identification, or an MAC layer address of the second terminal, or other identification information that can uniquely identify the second terminal, which is not limited in the present application.

In some embodiments, the identification information of the second terminal includes at least one of:
a layer 2 identification (L2-ID) of the second terminal, an MAC-ID of the second terminal, an MAC layer address of the second terminal, an RNTI of the second terminal, or a 5G-S-TSMI of the second terminal.

In some embodiments, the RNTI may include at least one of:
a cell radio network temporary identity (Cell RNTI, C-RNTI), or an inactive radio network temporary identity (Inactive RNTI, I-RNTI).

In some embodiments, the type information of the connection between the first terminal and the second terminal may be a connection type defined by the non-3GPP protocol, for example, a non-PC5 connection or a non-PC5 interface, which is not limited in the present application.

In some embodiments, the type information of the connection between the first terminal and the second terminal, includes but not is limited to at least one of:
a wired connection, a wireless local area network (WLAN) connection, a blue tooth (BT) connection, or a Zigbee connection.

In some embodiments, the quality information of the connection between the first terminal and the second terminal includes but is not limited to, at least one of:
reference signal receiving power (RSRP), reference signal receiving quality (RSRQ), signal to interference plus noise ratio (SINR), channel quality indicator (CQI), or received signal strength indication (RSSI).

In some embodiments, the quality of the connection between the first terminal and the second terminal may be measured by the first terminal, or may be measured by the second terminal.

In some embodiments, the identity type information of the first terminal includes at least one of: an anchor UE, a remote UE, or an assisted UE.

In some embodiments, the identity type information of the second terminal includes at least one of: assisting terminal, or a relay UE.

In the claimed invention, the target information is acquired from the first terminal. Optionally, and not part of the claimed invention, the target information is acquired from the second terminal

In some embodiments of the present application, as shown in FIG. 4, the S210 includes:
S201, receiving, by the network device, first information transmitted by the first terminal, where the first information is information related to the connection between the first terminal and the second terminal; and/or
S202, receiving, by the network device, second information transmitted by the second terminal, where the second information is information related to the connection between the first terminal and the second terminal.

Correspondingly, the first terminal transmits first information to the network device; and/or the second terminal transmits second information to the network device.

In some embodiments, the target information is determined according to the first information and/or the second information.

In some embodiments, the target information includes the first information and/or the second information.

In some embodiments, the first information includes but is not limited to at least one of:
identification information of the first terminal;
identification information of the second terminal;
type information of the connection between the first terminal and the second terminal;
quality information of the connection between the first terminal and the second terminal;
identity type information of the first terminal; or
first indication information, which is used to indicate that an RLF occurs in the connection between the first terminal and the second terminal.

In some embodiments, the second information includes at least one of:
identification information of the first terminal;
identification information of the second terminal;
type information of the connection between the first terminal and the second terminal;
quality information of the connection between the first terminal and the second terminal;
identity type information of the second terminal; or
second indication information, which is used to indicate that an RLF occurs in the connection between the first terminal and the second terminal.

In some embodiments, the first information is used to establish, modify, release or resume a relay connection between the first terminal and the network device.

In some embodiments, the second information is used to establish, modify, release or resume a relay connection between the first terminal and the network device.

In some embodiments of the present application, the method 200 further includes:
transmitting, by the first terminal, identification information of the first terminal to the second terminal; and/or
transmitting, by the second terminal, identification information of the second terminal to the first terminal.

That is, the identification information of the second terminal in the first information may be acquired from the second terminal, and the identification information of the first terminal in the second information may be acquired from the first terminal.

In some embodiments, the identification information of the first terminal may be transmitted via the first interface.

For example, the first terminal transmits the identification information of the first terminal via at least one of a PC5-RRC signaling, a PC5-S signaling or an adaptation layer control PDU.

In some embodiments, the identification information of the second terminal may be transmitted via the first interface.

For example, the second terminal transmits the identification information of the first terminal via at least one of a PC5-RRC signaling, a PC5-S signaling or an adaptation layer control PDU.

In some embodiments, the identification information of the first terminal in the target information may be determined according to the identification information of the first terminal in the first information and/or the identification information of the first terminal in the second information.

In some embodiments, the identification information of the second terminal in the target information may be determined according to the identification information of the second terminal in the first information and/or the identification information of the second terminal in the second information.

In some embodiments, the type information of the connection between the first terminal and the second terminal in the target information may be determined according to the type information of the connection between the first terminal and the second terminal in the first information and/or the type information of the connection between the first terminal and the second terminal in the second information.

In some embodiments, the quality information of the connection between the first terminal and the second terminal in the target information may be determined according to the quality information of the connection between the first terminal and the second terminal in the first information and/or the quality information of the connection between the first terminal and the second terminal in the second information.

In some embodiments, the identity type information of the first terminal in the target information may be determined according to the identity type information of the first terminal in the first information.

In some embodiments, the identity type information of the second terminal in the target information may be determined according to the identity type information of the second terminal in the second information

In some embodiments, the target indication information in the target information may be determined according to the first indication information in the first information and/or the second indication information in the second information

In some embodiments, the first information is transmitted by the first terminal itself.

In some other embodiments, the first information is transmitted by the first terminal based on an instruction (or trigger) of the network device.

In some embodiments, the first information is transmitted in a case where a radio link failure (RLF) occurs in a relay connection between the first terminal and the second terminal.

In other words, the first terminal may decide to transmit the first information by itself, or may transmit the first information based on the indication (or trigger) of the network device, or may transmit the first information in a specific case, for example, transmit the first information in a case where the RLF occurs in the relay connection.

As an example, the first terminal may transmit the first information to establish a relay connection between the first terminal and the second terminal, in a case where a service transmission needs to be performed via the relay connection.

As another example, in a case where the RLF occurs in the relay connection between the first terminal and the network device, the first terminal may transmit the first information to modify, release or resume the relay connection between the first terminal and the second terminal.

In some embodiments, the occurrence of the RLF in the relay connection between the first terminal and the network device may be determined by at least one of a PDCP layer, a PC5-RRC layer, or a PC5-S layer of the first terminal, or may also be determined by a non-3GPP bottom layer (e.g., a physical layer) of the first terminal, and further reported by the non-3GPP bottom layer of the first terminal to a higher layer (e.g., the PDCP layer, the PC5-RRC layer, or the PC5-S layer) of the first terminal.

It should be understood that the first information may be carried by any uplink information or uplink message, which is not limited in this application.

In the claimed invention, the first information is carried by terminal assistance information (UEAssistanceInformation). Optionally, and not part of the claimed invention, the first information is carried by at least one of the following signaling: sidelink terminal information (SidelinkUEinformation), a terminal information response (UEInformationResponse), a measurement report message, or failure information (failureInformation).

Herein, the measurement report message may be a message in a measurement report process.

For example, in a case where the first terminal requests to establish a relay connection between the first terminal and the network device, the first terminal may report the first information by using UEAssistanceInformation, SidelinkUEinformation or UEInformationResponse, or may also report the first information in the measurement report process.

For another example, in a case where the RLF occurs in the relay connection between the first terminal and the network device, the first terminal may report the first information by using UEAssistanceInformation, SidelinkUEinformation, UEInformationResponse or failureInformation, or may report the first information in the measurement report process.

It should be understood that the network device may indicate the first terminal to transmit the first information via any downlink information or downlink signaling, which is not limited in the present application.

As an example but not a limitation, the network device indicates the first terminal to transmit the first information via a terminal information request (UEInformationRequest) and/or a measurement configuration message. Herein, the measurement configuration message may be a message in a measurement configuration process.

For example, in a case where the network device uses the UEInformationRequest to indicate the first terminal to transmit the first information, the first terminal uses a UEInformationResponse to report the first information

For another example, in a case where the network device indicates the first terminal to transmit the first information in the measurement configuration process, the first terminal may report the first information in the measurement report process.

In some embodiments, the second information is transmitted by the second terminal itself.

In some other embodiments, the second information is transmitted by the second terminal based on an indication (or trigger) of the network device.

In some embodiments, the second information is transmitted in a case where an RLF occurs in the connection between the first terminal and the second terminal.

That is, the second terminal may decide to transmit the second information by itself, or may transmit the second information based on the indication (or trigger) of the network device, or may transmit the second information in a specific case, for example, transmit the second information in a case where the RLF occurs in the relay connection.

In some embodiments, the occurrence of the RLF in the connection between the first terminal and the second terminal may be determined by at least one of a PDCP layer, a PC5-RRC layer or a PC5-S layer of the second terminal, or may be determined by a non-3GPP bottom layer (e.g., a physical layer) of the second terminal, and further reported by the non-3GPP bottom layer of the second terminal to a higher layer (e.g., the PDCP layer, the PC5-RRC layer or the PC5-S layer) of the second terminal.

It should be understood that the second information may be carried by any uplink information or uplink message, which is not limited in this application.

As an example but not a limitation, the second information is carried by at least one of the following signaling:
terminal assistance information (UEAssistanceInformation), sidelink terminal information (SidelinkUEinformation), a terminal information response (UEInformationResponse), a measurement report message, or failure information (failureInformation).

Herein, the measurement report message may be a message in a measurement report process.

It should be understood that the network device may indicate the second terminal to transmit the second information via any downlink information or downlink signaling, which is not limited in the present application.

As an example but not a limitation, the network device indicates the second terminal to transmit the second information, via a terminal information request (UEInformationRequest) and/or a measurement configuration message. Herein, the measurement configuration message may be a message in a measurement configuration process.

For example, in a case where the network device uses the UEInformationRequest to indicate the second terminal to transmit the second information, the second terminal uses a UEInformationResponse to report the first information.

For another example, in a case where the network device indicates the second terminal to transmit the second information in the measurement configuration process, the second terminal may report the second information in the measurement report process.

In some embodiments, after the network device receives the first information and/or the second information, the network device may establish, modify, release or resume the relay connection between the first terminal and the network device according to the first information and/or the second information.

For example, the network device may distribute connection configuration information based on the first information and/or the second information, and the connection configuration information is used to establish, modify, release or resume the relay connection between the first terminal and the network device.

In some embodiments of the present application, the method 200 further includes:
S203, transmitting, by the network device, third information to the first terminal, where the third information is used to establish, modify, release or resume a relay connection between the first terminal and the network device.

Correspondingly, the first terminal receives the third information.

In some embodiments, the third information includes at least one of:
identification information of the second terminal;
index information of first information, where the index information is used to indicate the first information; or
first configuration information, which is used to configure a transmission performed via the relay connection between the first terminal and the network device.

In some embodiments, in a case of establishing a relay connection between the first terminal and the network device, the first configuration information may be used to indicate information such as a bearer or a service associated with the relay connection, so that the first terminal may transmit the service by the corresponding bearer according to the first configuration information.

As an example but not a limitation, the first configuration information is used to configure a target bearer, where a transmission corresponding to the target bearer is performed via the relay connection, or, a service corresponding to the target bearer may be transmitted via the second terminal.

In some other embodiments, the third information may also indicate a modified connection configuration, so that the first terminal may modify the relay connection based on the modified connection configuration, and further may perform a data transmission based on the modified relay connection.

In some further embodiments, the third information may further indicate a connection configuration to be released, so that the first terminal may release the relay connection according to the connection configuration to be released.

In some embodiments, the third information is determined according to the target information, or the third information is determined according to the first information and/or the second information.

In some embodiments of the present application, the method 200 further includes:
S204, transmitting, by the network device, fourth information to the second terminal, where the fourth information is used to establish, modify, release or resume a relay connection between the first terminal and the network device.

Correspondingly, the second terminal receives the third information.

In some embodiments, the fourth information includes at least one of:
identification information of the first terminal;
index information of second information, where the index information is used to indicate the second information; or
second configuration information, which is used to configure a transmission performed via the relay connection between the first terminal and the network device.

In some embodiments, in a case of establishing a relay connection between the first terminal and the network device, the second configuration information may be used to indicate information such as a Uu RLC channel or service associated with the relay connection, so that the second terminal may transmit the service by the corresponding Uu RLC channel according to the second configuration information.

As an example but not a limitation, the second configuration information is used to configure a target Uu RLC channel, where a transmission corresponding to the target Uu RLC channel is performed via the relay connection, or, a service corresponding to the target Uu RLC channel may be transmitted via the second terminal.

In some embodiments, the fourth information is determined according to the target information, or the fourth information is determined according to the first information and/or the second information.

The wireless communication method of the embodiments of the present application is described from the perspective of devices' interaction, with the first terminal being a remote UE and the second terminal being a relay UE, in combination with Embodiment 1 and Embodiment 2 below.

Embodiment 1: establishing a relay connection between the first terminal and the network device

As shown in FIG. 5, the following steps may be included:
S301, identification information is interacted between the remote UE and the relay UE.

For example, the remote UE may acquire the identification information of the relay UE, or the identification information related to the identity of the relay UE.

For another example, the relay UE may acquire the identification information of the remote UE, or the identification information related to the identity of the remote UE.

Optionally, the remote UE and the relay UE may perform the transmission via a PC5-RRC, a PC5-S signaling of the first interface, or an adaptation layer control PDU.

Optionally, S302, the network device indicates (or triggers) the remote UE to report the first information.

S303, the remote UE reports the first information to the network device.

In some embodiments, the first information may include at least one of:
identification information of the remote UE;
identification information of the relay UE;
type information of the connection between the remote UE and the relay UE;
quality information of the connection between the remote UE and the relay UE; or
identity type information of the remote UE.

In some embodiments, the first information is carried by at least one of the following signaling:
terminal assistance information (UEAssistanceInformation), sidelink terminal information (SidelinkUEinformation), a terminal information response (UEInformationResponse), or a measurement report message.

Herein, the measurement report message may be a message in the measurement report process.

In some embodiments, the first information may include the identification information of the relay UE, or may also include the identification information of the remote UE and the identification information of the relay UE.

Optionally, the identification information of the remote UE may be a layer 2 ID, MAC-ID, MAC layer address, C-RNTI, 5G-S-TMSI, I-RNTI, and the like of the remote UE.

Optionally, the identification information of the relay UE may be layer 2 ID, MAC-ID, MAC layer address, C-RNTI, 5G-S-TMSI, I-RNTI, and the like of the relay UE.

Optionally, the first information may include connection type information for the first interface, such as a wired connection, a WLAN connection, a BT connection, etc.

Optionally, the first information may include connection quality information for the first interface, such as RSRP, RSRQ, RSSI, etc.

Optionally, the first information may include identity type information of the remote UE, for example, as an anchor UE or a remote UE, etc.

Optionally, S304, the network device indicates (or triggers) the relay UE to report the second information.

S305, the relay UE reports the second information to the network device.

In some embodiments, the second information may include at least one of:
identification information of the remote UE;
identification information of the relay UE;
type information of the connection between the remote UE and the relay UE;
quality information of the connection between the remote UE and the relay UE; or
identity type information of the relay UE.

In some embodiments, the second information is carried by at least one of the following signaling:
terminal assistance information (UEAssistanceInformation), sidelink terminal information (SidelinkUEinformation), a terminal information response (UEInformationResponse), or a measurement report message.

Herein, the measurement report message may be a message in the measurement report process.

In some embodiments, the second information may include the identification information of the remote UE, or may also include the identification information of the remote UE and the identification information of the relay UE.

Optionally, the identification information of the remote UE may be a layer 2 ID, MAC layer ID, MAC layer address, C-RNTI, 5G-S-TMSI, I-RNTI, and the like of the remote UE.

Optionally, the identification information of the relay UE may be layer 2 ID, MAC-ID, MAC layer address, C-RNTI, 5G-S-TMSI, I-RNTI, and the like of the relay UE.

Optionally, the second information may include connection type information for the first interface, such as a wired connection, a WLAN connection, a BT connection, etc.

Optionally, the second information may include connection quality information for the first interface, such as RSRP, RSRQ, RSSI, etc.

Optionally, the second information may include identity type information of the relay UE, for example, as an assisting UE or a relay UE, etc.

Further, the network device distributes connection configuration information to the remote UE and the relay UE.

For example, the network device configures the remote UE to transmit data and/or signaling via the relay UE according to the first information reported by the remote UE and the second information reported by the relay UE.

S306, the network device transmits third information to the remote UE.

In some embodiments, the third information includes at least one of:
identification information of the relay UE, such as a layer 2 ID, MAC-ID, MAC layer address, C-RNTI, 5G-S-TMSI, I-RNTI;
index information of the first information, which is used to indicate the first information; or
first configuration information, which is used to indicate a transmission performed via the relay connection between the first terminal and the network device.

Optionally, the third information may also include identification information of the remote UE.

Optionally, the first configuration information is used to configure bearers or services associated with the relay connection, that is, which bearers or services are transmitted via the relay connection.

S307, the network device transmits fourth information to the relay UE.

In some embodiments, the fourth information includes at least one of:
identification information of the remote UE, such as a layer 2 ID, MAC-ID, MAC layer address, C-RNTI, 5G-S-TMSI, I-RNTI;
index information of the second information, which is used to indicate the second information; or
second configuration information, which is used to indicate a transmission performed via the relay connection between the first terminal and the network device.

Optionally, the second configuration information is used to configure Uu RLC channels or services associated with the relay connection, etc., that is, signaling and/or data of the remote UE is carried through which Uu RLC channels.

Optionally, the fourth information may also include identification information of the relay UE.

Embodiment 2: RLF report, and modification, release or resumption of the relay connection between the first terminal and the network device

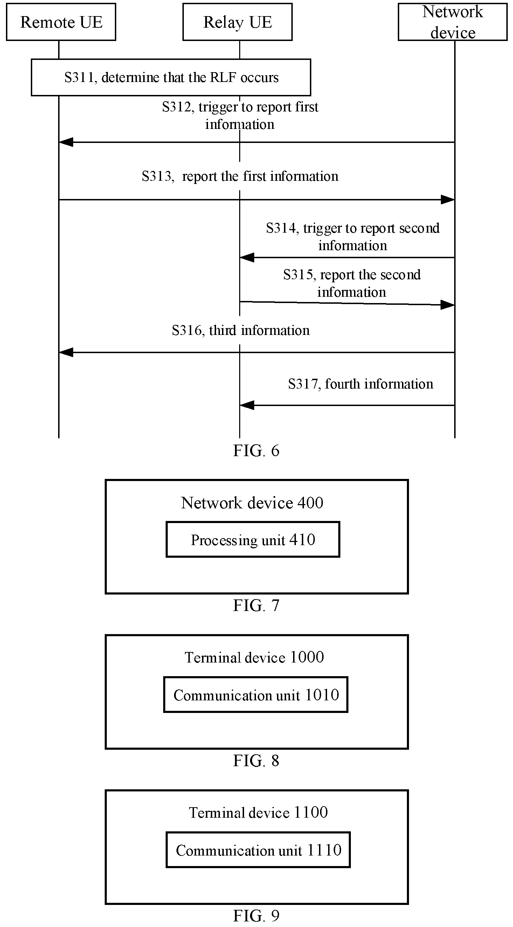

As shown in FIG. 6, the following steps may be included:

S311, the remote UE and/or the relay UE determines that the RLF occurs.

In this Embodiment 2, a relay connection has been established between the remote UE and the network device.

In some embodiments, the occurrence of the RLF in the connection between the first terminal and the second terminal may be determined by at least one of a PDCP layer, a PC5-RRC layer or a PC5-S layer of the first terminal, or may be determined by a non-3GPP bottom layer (e.g., a physical layer) of the first terminal, and further reported by the non-3GPP bottom layer of the first terminal to a higher layer (e.g., the PDCP layer, PC5-RRC layer or PC5-S layer) of the first terminal.

In some embodiments, the occurrence of the RLF in the connection between the first terminal and the second terminal may be determined by at least one of a PDCP layer, a PC5-RRC layer or a PC5-S layer of the second terminal, or may be determined by a non-3GPP bottom layer (e.g., a physical layer) of the second terminal, and further reported by the non-3GPP bottom layer of the first terminal to a higher layer (e.g., the PDCP layer, PC5-RRC layer or PC5-S layer) of the second terminal.

Optionally, S312, the network device indicates (or triggers) the remote UE to report the first information.

S313, the remote UE reports the first information to the network device.

In some embodiments, the first information may include at least one of:
identification information of the remote UE;
identification information of the relay UE;
type information of the connection between the remote UE and the relay UE;
quality information of the connection between the remote UE and the relay UE;
identity type information of the remote UE; or
first indication information, which is used to indicate that an RLF occurs in the connection between the remote UE and the relay UE.

In some embodiments, the first information is carried by at least one of the following signaling:
UEAssistanceInformation, SidelinkUEinformation, UEInformationResponse, a measurement report message, or failureInformation. Herein, the measurement report message may be a message in the measurement report process.

In some embodiments, the first information may include the identification information of the relay UE, or may also include the identification information of the remote UE and the identification information of the relay UE.

Optionally, the identification information of the remote UE may be a layer 2 ID, MAC-ID, MAC layer address, C-RNTI, 5G-S-TMSI, I-RNTI, and the like of the remote UE.

Optionally, the identification information of the relay UE may be a layer 2 ID, MAC-ID, MAC layer address, C-RNTI, 5G-S-TMSI, I-RNTI, and the like of the relay UE.

Optionally, the first information may include connection type information for the first interface, such as a wired connection, a WLAN connection, a BT connection, etc.

Optionally, the first information may include connection quality information for the first interface, such as RSRP, RSRQ, RSSI, etc.

Optionally, the first information may include first indication information, which is used to indicate that the RLF occurs in the connection between the remote UE and the relay UE.

Optionally, the first information may include identity type information of the remote UE, for example, as an anchor UE or a remote UE, etc.

Optionally, S314, the network device indicates (or triggers) the relay UE to report the second information.

S315, the relay UE reports the second information to the network device.

In some embodiments, the second information may include at least one of:
identification information of the remote UE;
identification information of the relay UE;
type information of the connection between the remote UE and the relay UE;
quality information of the connection between the remote UE and the relay UE;
identity type information of the relay UE; or
second indication information, which is used to indicate that an RLF occurs in the connection between the remote terminal and the relay terminal.

In some embodiments, the second information is carried by at least one of the following signaling:
UEAssistanceInformation, SidelinkUEinformation, UEInformationResponse, measurement report message, or failureInformation. Herein, the measurement report message may be a message in the measurement report process.

In some embodiments, the second information may include the identification information of the remote UE, or may also include the identification information of the remote UE and the identification information of the relay UE.

Optionally, the identification information of the remote UE may be a layer 2 ID, MAC-ID, MAC layer address, C-RNTI, 5G-S-TMSI, I-RNTI, and the like of the remote UE.

Optionally, the identification information of the relay UE may be layer 2 ID, MAC-ID, MAC layer address, C-RNTI, 5G-S-TMSI, I-RNTI, and the like of the relay UE.

Optionally, the second information may include second indication information is used to indicate that an RLF occurs between the remote UE and the relay UE.

Optionally, the second information may include connection type information for the first interface, such as a wired connection, a WLAN connection, a BT connection, etc.

Optionally, the second information may include connection quality information for the first interface, such as RSRP, RSRQ, RSSI, etc.

Optionally, the second information may include identity type information of the relay UE, for example, as an assisting UE or a relay UE, etc.

Further optionally, the network device modifies, releases or resumes the relay connection between the remote UE and the network device according to the first information reported by the remote UE and the second information reported by the relay UE.

Optionally, S316, the network device transmits third information to the remote UE.

In some embodiments, the third information includes identification information of the relay UE, such as a layer 2 ID, MAC-ID, MAC layer address, C-RNTI, 5G-S-TMSI, or I-RNTI.

In some embodiments, the third information includes index information of the first information, for indicating the first information.

In some embodiments, the third information includes third indication information, which is used to indicate modification, release or resumption of the relay connection between the remote UE and the network device.

Optionally, the third indication information may indicate a modified connection configuration, or a connection configuration to be released, or a connection configuration to be resumed.

Optionally, the third information may also include identification information of the remote UE.

S317, the network device transmits fourth information to the relay UE.

In some embodiments, the fourth information includes identification information of the remote UE, such as a layer 2 ID, MAC-ID, MAC layer address, C-RNTI, 5G-S-TMSI, or I-RNTI.

In some embodiments, the fourth information includes index information of the second information, which is used to indicate the second information.

In some embodiments, the fourth information includes fourth indication information, which is used to indicate modification, release or resumption of the relay connection between the remote UE and the network device.

Optionally, the fourth indication information may indicate a modified connection configuration, or a connection configuration to be released, or a connection configuration to be resumed.

In summary, in the embodiments of the present application, the remote UE and/or the relay UE may report connection-related information between the remote UE and the relay UE to the network device. Furthermore, the network device may manage the connection between the remote UE and the network device, for example, establish a relay connection between the remote UE and the network device, or, modify, release or resume the relay connection between the remote UE and the network device, according to the connection-related information.

Method embodiments of the present application are described in detail above in conjunction with FIG. 4 to FIG. 6, and apparatus embodiments of the present application will be described in detail below in conjunction with FIG. 7 to FIG. 9. It can be understood that the apparatus embodiments correspond to the method embodiments, and similar descriptions may refer to the method embodiments.

FIG. 7 illustrates a schematic block diagram of a network device 400 according to the claimed invention. As shown in FIG. 7, the network device 400 includes:
a processing unit 410, configured to acquire target information, which is information related to a connection between a first terminal and a second terminal; where the first terminal and the second terminal are connected via a first interface, and the first interface is not an interface defined by a 3rd generation partnership project (3GPP) protocol.

In the claimed invention, the target information includes identification information of the second terminal. Optionally and not part of the claimed invention, the target information includes at least one of the following information:
identification information of the first terminal;
type information of the connection between the first terminal and the second terminal;
quality information of the connection between the first terminal and the second terminal;
identity type information of the first terminal;
identity type information of the second terminal; or
target indication information, which is used to indicate that a radio link failure (RLF) occurs in the connection between the first terminal and the terminal

In some embodiments, the identification information of the first terminal includes at least one of:
a layer 2 identification (L2-ID) of the first terminal, media access control layer identification information (MAC-ID) of the first terminal, an MAC layer address of the first terminal, a cell radio network temporary identity (C-RNTI) of the first terminal, an inactive radio network temporary identity (I-RNTI) of the first terminal, or a 5G shorted temporary mobile subscriber identity code (5G-S-TSMI) of the first terminal.

In the claimed invention, the identification information of the second terminal includes a C-RNTI of the second terminal. Optionally, and not part of the claimed invention, the identification information of the second terminal includes at least one of:
an L2-ID of the second terminal, an MAC-ID of the second terminal, an MAC layer address of the second terminal, an I-RNTI of the second terminal, or a 5G-S-TSMI of the second terminal.

In some embodiments, the type information of the connection between the first terminal and the second terminal includes at least one of:
a wired connection, a wireless local area network (WLAN) connection, or a blue tooth (BT) connection.

In some embodiments, the quality information of the connection between the first terminal and the second terminal includes at least one of:
reference signal receiving power (RSRP), reference signal receiving quality (RSRQ), signal to interference plus noise ratio (SINR), channel quality indicator (CQI), or received signal strength indication (RSSI).

In some embodiments, the identity type information of the first terminal includes at least one of: an anchor terminal, or a remote terminal.

In some embodiments, the identity type information of the second terminal includes at least one of: an assisting terminal, or a relay terminal.

In the claimed invention, the network device further includes:
a communication unit, configured to receive first information transmitted by the first terminal, where the first information is information related to the connection between the first terminal and the second terminal; and/or
receive second information transmitted by the second terminal, where the second information is information related to the connection between the first terminal and the second terminal

In the claimed invention, the processing unit 410 controls the communication unit to receive the first information and/or the second information.

In some embodiments, the target information is determined according to the first information and/or the second information

In some embodiments, the first information includes at least one of:
identification information of the first terminal;
identification information of the second terminal;
type information of the connection between the first terminal and the second terminal;
quality information of the connection between the first terminal and the second terminal;
identity type information of the first terminal; or
first indication information, which is used to indicate that an RLF occurs in the connection between the first terminal and the second terminal

In some embodiments, the second information includes at least one of:
identification information of the first terminal;
identification information of the second terminal;
type information of the connection between the first terminal and the second terminal;
quality information of the connection between the first terminal and the second terminal;
identity type information of the second terminal; or
second indication information, which is used to indicate that an RLF occurs in the connection between the first terminal and the second terminal.

In some embodiments, target indication information in the target information is determined according to first indication information in the first information and/or second indication information in the second information.

In the claimed invention, the first information is transmitted by the first terminal based on an indication of the network device. Optionally and not part of the claimed invention, the first information is transmitted by the first terminal itself; or
the first information is transmitted in a case where an RLF occurs in the connection between the first terminal and the second terminal.

In some embodiments, the first information is carried by at least one of the following signaling:
terminal assistance information (UEAssistanceInformation), sidelink terminal information (SidelinkUEinformation), a terminal information response (UEInformationResponse), a measurement report message, or failure information (failureInformation).

In some embodiments, the indication of the network device is carried by a terminal information request (UEInformationRequest) and/or a measurement configuration message.

In some embodiments, the occurrence of the RLF in the connection between the first terminal and the second terminal is determined by at least one of a packet data convergence protocol (PDCP) layer, a PC5-RRC layer or a PC5-S layer of the first terminal.

In some embodiments, the second information is transmitted by the second terminal itself, or
the second information is transmitted by the second terminal based on an indication of the network device; or
the second information is transmitted in a case where an RLF occurs in the connection between the first terminal and the second terminal.

In some embodiments, the second information is carried by at least one of the following signaling:
terminal assistance information (UEAssistanceInformation), sidelink terminal information (SidelinkUEinformation), a terminal information response (UEInformationResponse), measurement report information, or failure information (failureInformation).

In some embodiments, the indication of the network device is carried by a terminal information request (UEInformationRequest) and/or measurement configuration information.

In some embodiments, the occurrence of the RLF in the connection between the first terminal and the second terminal is determined by at least one of a PDCP layer, a PC5-RRC layer or a PC5-S layer of the second terminal.

In some embodiments, the first information is used to establish, modify, release or resume a relay connection between the first terminal and the network device

In some embodiments, the second information is used to establish, modify, release or resume a relay connection between the first terminal and the network device.

In some embodiments, the network device 400 further includes:
a communication unit, configured to transmit third information to the first terminal, where the third information is used to establish, modify, release or resume a relay connection between the first terminal and the network device.

In some embodiments, the third information includes at least one of:
identification information of the second terminal;
index information of first information, where the index information is used to indicate the first information; or
first configuration information, which is used to configure a transmission performed via the relay connection hetween the first terminal and the network device

In some embodiments, the first configuration information is used to configure a target bearer, where the transmission corresponding to the target bearer is performed via the relay connection.

In some embodiments, the third information is determined according to the target information.

In some embodiments, the network device 400 further includes:
a communication unit, configured to transmit fourth information to the second terminal, where the fourth information is used to establish, modify, release or resume a relay connection between the first terminal and the network device

In some embodiments, the fourth information includes at least one of:
identification information of the first terminal;
index information of second information, where the index information is used to indicate the second information; or
second configuration information, which is used to configure a transmission performed via the relay connection between the first terminal and the network device.

In some embodiments, the second configuration information is used to configure a target Uu radio link control (RLC) channel, where the transmission corresponding to the target Uu RLC channel is performed via the relay connection.

In some embodiments, the fourth information is determined according to the target information.

Optionally, in some embodiments, the communication unit mentioned above may be a communication interface or a transceiver, or an input/output interface of a communication chip or a system on chip. The processing unit mentioned above may be one or more processors.

It should be understood that the network device 400 according to the embodiments of the present application may correspond to the network device in the method embodiments of the present application, and the above-mentioned and other operations and/or functions of each unit in the network device 400 are respectively for implementing the corresponding processes of the network device in the method 200 shown in FIG. 4 to FIG. 6, which will not be repeated here for the sake of brevity.

FIG. 8 illustrates a schematic block diagram of a terminal device 1000 according to the claimed invention. As shown in FIG. 8, the terminal device 1000 includes:
a communication unit 1010, configured to transmit first information to a network device, which is information related to a connection between the terminal device and a second terminal, where the terminal device and the second terminal are connected via a first interface, and the first interface is not an interface defined by a 3rd generation partnership project (3GPP) protocol.

In the claimed invention, the first information includes identification information of the second terminal. Optionally and not part of the claimed inevntion, the first information includes at least one of:
identification information of the terminal device;
type information of the connection between the terminal device and the second terminal;
quality information of the connection between the terminal device and the second terminal;
identity type information of the terminal device; or
first indication information, which is used to indicate that a radio link failure (RLF) occurs in the connection between the terminal device and the second terminal.

In some embodiments, the identification information of the terminal device includes at least one of:
a layer 2 identification (L2-ID) of the terminal device, media access control layer identification information (MAC-ID) of the terminal device, an MAC layer address of the terminal device, a cell radio network temporary identity (C-RNTI) of the terminal device, an inactive radio network temporary identity (I-RNTI) of the terminal device, or a 5G shorted temporary mobile subscriber identity code (5G-S-TSMI) of the terminal device.

In the claimed invention, the identification information of the second terminal includes a C-RNTI of the second terminal. at least one of
the identification information of the second terminal includes at least one of: an L2-ID of the second terminal, an MAC-ID of the second terminal, an MAC layer address of the second terminal, an I-RNTI of the second terminal, or a 5G-S-TSMI of the second terminal.

In some embodiments, the type information of the connection between the terminal device and the second terminal includes at least one of:
a wired connection, a wireless local area network (WLAN) connection, or a blue tooth (BT) connection.

In some embodiments, the quality information of the connection between the terminal device and the second terminal includes at least one of:
reference signal receiving power (RSRP), reference signal receiving quality (RSRQ), signal to interference plus noise ratio (SINR), channel quality indicator (CQI), or received signal strength indication (RSSI).

In some embodiments, the identity type information of the terminal device includes at least one of: an anchor terminal, or a remote terminal.

In the claimed invention, the first information is transmitted by the terminal device based on an indication of the network device. Optionally and not part of the claimed invention, the first information is transmitted by the terminal device itself; or
the first information is transmitted in a case where an RLF occurs in the connection hetween the terminal device and the second terminal

In some embodiments, the first information is carried by at least one of the following signaling:
terminal assistance information (UEAssistanceInformation), sidelink terminal information (SidelinkUEinformation), a terminal information response (UEInformationResponse), measurement report information, or failure information (failureInformation).

In some embodiments, the indication of the network device is carried by a terminal information request (UEInformationRequest) and/or measurement configuration information.

In some embodiments, the occurrence of the RLF in the connection between the terminal device and the second terminal is determined by at least one of a packet data convergence protocol (PDCP) layer, a PC5-RRC layer or a PC5-S layer of the terminal device.

In some embodiments, the communication unit 1010 is further configured to:
receive third information transmitted by the network device, where the third information is used to establish, modify, release or resume a relay connection between the terminal device and the network device.

In some embodiments, the third information includes at least one of:
identification information of the second terminal;
index information of the first information, where the index information is used to indicate the first information; or
first configuration information, which is used to configure a transmission performed via the relay connection between the terminal device and the network device.

In some embodiments, the first configuration information is used to configure a target bearer, where the transmission corresponding to the target bearer is performed via the relay connection.

In some embodiments, the communications unit 1010 is further configured to transmit identification information of the terminal device to the second terminal.

In some embodiments, the identification information of the terminal device is transmitted via at least one of a PC5-RRC signaling, a PC5-S signaling or an adaptation layer control protocol data unit (PDU).

In some embodiments, the communications unit 1010 is further configured to receive identification information of the second terminal transmitted by the second terminal.

In some embodiments, the identification information of the second terminal is transmitted via at least one of a PC5-RRC signaling, a PC5-S signaling or an adaptation layer control PDU.

In some embodiments, the first information is used to establish, modify, release or resume a relay connection between the terminal device and the network device.

Optionally, in some embodiments, the communication unit mentioned above may be a communication interface or a transceiver, or an input/output interface of a communication chip or a system on chip. The processing unit mentioned above may be one or more processors.

It should be understood that the terminal device 1000 according to the embodiments of the present application may correspond to the first terminal in the method embodiments of the present application, and the above-mentioned and other operations and/or functions of each unit in the terminal device 1000 are respectively for implementing the corresponding processes of the first terminal or the remote UE in the method 200 shown in FIG. 4 to FIG. 6, which will not be repeated here for the sake of brevity.

FIG. 9 illustrates a schematic block diagram of a terminal device 1100 according to the embodiments of the present application. As shown in FIG. 9, the terminal device 1100 includes:
a communication unit 1110, configured to transmit second information to a network device, which is information related to a connection between a first terminal and the terminal device, where the terminal device and the first terminal are connected via a first interface, and the first interface is not an interface defined by a 3rd generation partnership project (3GPP) protocol.

In some embodiments, the second information includes at least one of:
identification information of the first terminal;
identification information of the terminal device;
type information of the connection between the first terminal and the terminal device;
quality information of the connection between the first terminal and the terminal device;
identity type information of the terminal device; or
second indication information, which is used to indicate that an RLF occurs in the connection between the first terminal and the terminal device.

In some embodiments, the identification information of the first terminal includes at least one of:
a layer 2 identification (L2-ID) of the first terminal, media access control layer identification information (MAC-ID) of the first terminal, an MAC layer address of the first terminal, a cell radio network temporary identity (C-RNTI) of the first terminal, an inactive radio network temporary identity (I-RNTI) of the first terminal, or a 5G shorted temporary mobile subscriber identity code (5G-S-TSMI) of the first terminal.

In some embodiments, the identification information of the terminal device includes at least one of:
an L2-ID of the terminal device, an MAC-ID of the terminal device, an MAC layer address of the terminal device, a C-RNTI of the terminal device, an I-RNTI of the terminal device, or a 5G-S-TSMI of the terminal device.

In some embodiments, the type information of the connection between the first terminal and the terminal device includes at least one of:
a wired connection, a wireless local area network (WLAN) connection, or a blue tooth (BT) connection.

In some embodiments, the quality information of the connection between the first terminal and the terminal device includes at least one of:
reference signal receiving power (RSRP), reference signal receiving quality (RSRQ), signal to interference plus noise ratio (SINR), channel quality indicator (CQI), or received signal strength indication (RSSI).

In some embodiments, the second information is transmitted by the terminal device itself, or
the second information is transmitted by the terminal device based on an indication of the network device; or
the second information is transmitted in a case where an RLF occurs in the connection between the first terminal and the terminal device.

In some embodiments, the second information is carried by at least one of the following signaling:
terminal assistance information (UEAssistanceInformation), sidelink terminal information (SidelinkUEinformation), a terminal information response (UEInformationResponse), measurement report information, or failure information (failureInformation).

In some embodiments, the indication of the network device is carried by a terminal information request (UEInformationRequest) and/or measurement configuration information.

In some embodiments, the occurrence of the RLF in the connection between the first terminal and the terminal device is determined by at least one of a packet data convergence protocol (PDCP) layer, a PC5-RRC layer or a PC5-S layer of the terminal device.

In some embodiments, the communication unit 1110 is further configured to:
receive fourth information transmitted by the network device, where the fourth information is used to establish, modify, release or resume a relay connection between the first terminal and the network device.

In some embodiments, the fourth information includes at least one of:
identification information of the first terminal;
index information of the second information, where the index information is used to indicate the second information; or
second configuration information, which is used to configure a transmission performed via the relay connection between the first terminal and the network device.

In some embodiments, the second configuration information is used to configure a target Uu radio link control (RLC) channel, where the transmission corresponding to the target Uu RLC channel is performed via the relay connection.

In some embodiments, the communication unit 1110 is further configured to: receive identification information of the first terminal transmitted by the first terminal.

In some embodiments, the identification information of the first terminal is transmitted via at least one of a PC5-RRC signaling, a PC5-S signaling or an adaptation layer control PDU.

In some embodiments, the communication unit 1110 is further configured to: transmit identification information of the terminal device to the first terminal.

In some embodiments, the identification information of the terminal device is transmitted via at least one of a PC5-RRC signaling, a PC5-S signaling or an adaptation layer control protocol data unit (PDU).

In some embodiments, the second information is used to establish, modify, release or resume a relay connection between the first terminal and the network device.

Optionally, in some embodiments, the communication unit mentioned above may be a communication interface or a transceiver, or an input/output interface of a communication chip or a system on chip. The processing unit mentioned above may be one or more processors.

It should be understood that the terminal device 1100 according to the embodiments of the present application may correspond to the second terminal in the method embodiments of the present application, and the above-mentioned and other operations and/or functions of each unit in the terminal device 1100 are respectively for implementing the corresponding processes of the second terminal or the relay UE in the method 200 shown in FIG. 4 to FIG. 6, which will not be repeated here for the sake of brevity.

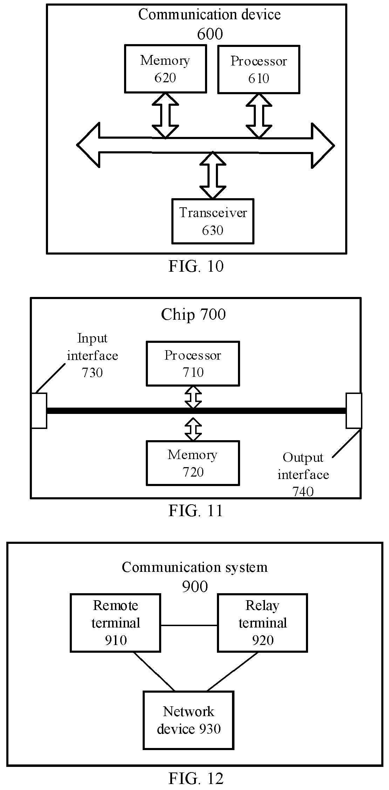

FIG. 10 is a schematic structural diagram of a communication device 600 provided in the embodiments of the present application. The communication device 600 shown in FIG. 10 includes a processor 610, which may invoke and execute a computer program from a memory, to implement the method in the embodiments of the present application.

Optionally, as shown in FIG. 10, the communication device 600 further includes a memory 620. Herein, the processor 610 may invoke and execute a computer program from the memory 620 to implement the method in the embodiments of the present application.

Herein, the memory 620 may be a separate device independent from the processor 610, or may also be integrated into the processor 610.

Optionally, as shown in FIG. 10, the communication device 600 may also include a transceiver 630, and the processor 610 may control the transceiver 630 to communicate with other devices, and specifically, to transmit information or data to other devices, or receive information or data transmitted by other devices.

Herein, the transceiver 630 may include a transmitter and a receiver. The transceiver 630 may further include antennas, and the number of antennas may be one or more.

Optionally, the communication device 600 may specifically be the network device of the embodiments of the present application, and the communication device 600 may implement the corresponding procedure implemented by the network device in the various methods of the embodiments of the present application, which will not be repeated here for the sake of brevity.

Optionally, the communication device 600 may specifically be the first terminal or the second terminal of the embodiments of the present application, and the communication device 600 may implement the corresponding procedure implemented by the first terminal or the second terminal in the various methods of the embodiments of the present application, which will not be repeated here for the sake of brevity.

FIG. 11 is a schematic structural diagram of a chip of the embodiments of the present application. The chip 700 shown in FIG. 11 includes a processor 710, the processor 710 may invoke and execute a computer program from a memory to implement the method in the embodiments of the present application.

Optionally, as shown in FIG. 11, the chip 700 may further include a memory 720. Herein, the processor 710 may invoke and execute a computer program from the memory 720 to implement the method in the embodiments of the present application.

Herein, the memory 720 may be a separate device independent from the processor 710, or may also be integrated into the processor 710.

Optionally, the chip 700 may further include an input interface 730. Herein, the processor 710 may control the input interface 730 to communicate with other devices or chips, and specifically, the input interface 730 may acquire information or data sent by other devices or chips.

Optionally, the chip 700 may further include an output interface 740. Herein, the processor 710 may control the output interface 740 to communicate with other devices or chips, and specifically, the output interface 740 may output information or data to other devices or chips.

Optionally, the chip may be applied to the network device in the embodiments of the present application, and the chip may implement the corresponding procedure implemented by the network device in the various methods of the embodiments of the present application, which will not be repeated here for the sake of brevity.

Optionally, the chip may be applied to the first terminal or the second terminal in the embodiments of the present application, and the chip may implement the corresponding procedure implemented by the first terminal or the second terminal in the various methods of the embodiments of the present application, which will not be repeated here for the sake of brevity.

It should be understood that the chip mentioned in the embodiments of the present application may also be called a system on chip, a system chip, a chip system or a system-on-chip chip, etc.

FIG. 12 is a schematic block diagram of a communication system 900 provided in the embodiments of the present application. As shown in FIG. 12, the communication system 900 includes a remote terminal 910, a relay terminal 920, and a network device 930.

Herein, the remote terminal 910 may be used to implement the corresponding functions implemented by the first terminal or the remote UE in the above-mentioned methods, the relay terminal 920 may be used to implement the corresponding functions implemented by the second terminal or the relay UE in the above-mentioned methods, and the network device 930 may be used to implement the corresponding functions implemented by the network device in the above-mentioned methods, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer readable storage medium for storing a computer program.

Optionally, the computer readable storage medium may be applied to the network device in the embodiments of the present application, and the computer program causes a computer to perform the corresponding procedure implemented by the network device in the various methods of the embodiments of the present application, which will not be repeated here for the sake of brevity.

Optionally, the computer readable storage medium may be applied to the first terminal or the second terminal in the embodiments of the present application, and the computer program causes a computer to perform the corresponding procedure implemented by the first terminal or the second terminal in various methods of the embodiments of the present application, which will not be repeated here for the sake of brevity.

The embodiments of the present application further provide a computer program product including a computer program instruction.

Optionally, the computer program product may be applied to the network device in the embodiments of the present application, and the computer program instruction causes a computer to perform the corresponding procedure implemented by the network device in the various methods of the embodiments of the present application, which will not be repeated here for the sake of brevity.

Optionally, the computer program product may be applied to the first terminal or the second terminal in the embodiments of the present application, and the computer program instruction causes a computer to perform the corresponding procedure implemented by the first terminal or the second terminal in various methods of the embodiments of the present application, which will not be repeated here for the sake of brevity.

The embodiments of the present application further provide a computer program.

Optionally, the computer program may be applied to network device in the embodiments of the present application, the computer program when being executed on a computer, causes the computer to perform the corresponding procedure implemented by the network device in various methods of the embodiments of the present application, which will not be repeated here for the sake of brevity.

Optionally, the computer program may be applied to the first terminal or the second terminal in the embodiments of the present application, the computer program when being executed on a computer, causes the computer to perform the corresponding procedure implemented by the first terminal or the second terminal in various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method (200), comprising:
acquiring (S210), by a network device, target information from a first terminal, wherein the target information is information related to a connection between the first terminal and a second terminal;
wherein the first terminal and the second terminal are connected via a first interface, the first interface is not an interface defined by a 3rd generation partnership project, 3GPP, protocol, the second terminal and the network device are connected via an interface defined by the 3GPP protocol, and a direct connection defined by the 3GPP protocol has been established between the first terminal and the network device;
wherein acquiring (S210), by the network device, the target information from the first terminal, comprises:
receiving, by the network device, first information transmitted by the first terminal, wherein the first information is information related to the connection between the first terminal and the second terminal;
wherein the target information comprises the first information, and the first information is carried by terminal assistance information, UEAssistanceInformation.

2. The method (200) according to claim 1, wherein the target information comprises identification information of the second terminal;
wherein the identification information of the second terminal comprises a C-RNTI of the second terminal.

3. The method (200) according to claim 1, wherein the first information is transmitted by the first terminal based on an indication of the network device.

4. The method (200) according to claim 1, further comprising:
transmitting (S203), by the network device, third information to the first terminal, wherein the third information is used to establish, modify, release or resume a relay connection between the first terminal and the network device;
wherein the third information comprises identification information of the second terminal, and the relay connection comprises a connection between the first terminal and the second terminal and a connection between the second terminal and the network device.

5. The method (200) according to claim 1, further comprising:
transmitting (S204), by the network device, fourth information to the second terminal, wherein the fourth information is used to establish, modify, release or resume a relay connection between the first terminal and the network device;
wherein the fourth information comprises second configuration information, which is used to configure a transmission performed via the relay connection between the first terminal and the network device, and the relay connection comprises a connection between the first terminal and the second terminal and a connection between the second terminal and the network device;
wherein the second configuration information is used to configure a target Uu radio link control, RLC, channel, wherein the transmission corresponding to the target Uu RLC channel is performed via the relay connection.

6. A wireless communication method (200), applied to a first terminal, wherein the first terminal and a second terminal are connected via a first interface, the first interface is not an interface defined by a 3rd generation partnership project, 3GPP, protocol, the second terminal and the network device are connected via an interface defined by the 3GPP protocol, and a direct connection defined by the 3GPP protocol has been established between the first terminal and a network device, and the method comprises:
transmitting (S201), by the first terminal, first information to the network device, wherein the first information is information related to a connection between the first terminal and the second terminal, target information comprises the first information, and the first information is carried by terminal assistance information, UEAssistanceInformation.

7. The method (200) according to claim 6, wherein the first information comprises identification information of the second terminal;
wherein the identification information of the second terminal comprises a C-RNTI of the second terminal.

8. The method (200) according to claim 6, wherein the first information is transmitted by the first terminal based on an indication of the network device.

9. The method (200) according to claim 6, further comprising:
receiving, by the first terminal, third information transmitted by the network device, wherein the third information is used to establish, modify, release or resume a relay connection between the first terminal and the network device;
wherein the third information comprises identification information of the second terminal, and the relay connection comprises a connection between the first terminal and the second terminal and a connection between the second terminal and the network device.

10. A network device (400), comprising:
a processing unit (410), configured to acquire target information from a first terminal, wherein the target information is information related to a connection between the first terminal and a second terminal;
wherein the first terminal and the second terminal are connected via a first interface, the first interface is not an interface defined by a 3rd generation partnership project, 3GPP, protocol, the second terminal and the network device are connected via an interface defined by the 3GPP protocol, and a direct connection defined by the 3GPP protocol has been established between the first terminal and the network device;
wherein the processing unit (410) is configured to control a communication unit to receive first information transmitted by the first terminal, wherein the first information is information related to the connection between the first terminal and the second terminal;
wherein the target information comprises the first information, and the first information is carried by terminal assistance information, UEAssistanceInformation.

11. The network device (400) according to claim 10, wherein the target information comprises identification information of the second terminal;
wherein the identification information of the second terminal comprises a C-RNTI of the second terminal.

12. The network device (400) according to claim 10, wherein the first information is transmitted by the first terminal based on an indication of the network device.

13. A terminal device (1000), wherein the terminal device (1000) and a second terminal are connected via a first interface, the first interface is not an interface defined by a 3rd generation partnership project, 3GPP, protocol, the second terminal and a network device are connected via an interface defined by the 3GPP protocol, and a direct connection defined by the 3GPP protocol has been established between the first terminal and the network device, and the terminal device comprises:
a communication unit (1010), configured to transmit first information to the network device, wherein the first information is information related to a connection between the terminal device and the second terminal, target information comprises the first information, and the first information is carried by terminal assistance information, UEAssistanceInformation.

14. The terminal device (1000) according to claim 13, wherein the first information comprises identification information of the second terminal;
wherein the identification information of the second terminal comprises a C-RNTI of the second terminal.

15. The terminal device (1000) according to claim 13, wherein the first information is transmitted by the first terminal based on an indication of the network device.

## Patentansprüche

1. Drahtloskommunikationsverfahren (200), umfassend:
Erfassen (S210), durch eine Netzvorrichtung, von Zielinformationen von einem ersten Endgerät, wobei die Zielinformationen Informationen sind, die eine Verbindung zwischen dem ersten Endgerät und einem zweiten Endgerät betreffen;
wobei das erste Endgerät und das zweite Endgerät über eine erste Schnittstelle verbunden sind, wobei die erste Schnittstelle keine Schnittstelle ist, die durch ein Protokoll des 3. Generation Partnership Projects, 3GPP, definiert ist, wobei das zweite Endgerät und die Netzvorrichtung über eine durch das 3GPP-Protokoll definierte Schnittstelle verbunden sind und eine direkte Verbindung, definiert durch das 3GPP-Protokoll, zwischen dem ersten Endgerät und der Netzvorrichtung hergestellt wurde;
wobei Erfassen (S210), durch die Netzvorrichtung, der Zielinformationen von dem ersten Endgerät, Folgendes umfasst:
Empfangen, durch die Netzvorrichtung, von ersten Informationen, die von dem ersten Endgerät gesendet wurden, wobei die ersten Informationen Informationen sind, welche die Verbindung zwischen dem ersten Endgerät und dem zweiten Endgerät betreffen;
wobei die Zielinformationen die ersten Informationen umfassen und die ersten Informationen von Endgeräteassistenzinformationen, UEAssistanceInformation, geführt werden.

2. Verfahren (200) nach Anspruch 1, wobei die Zielinformationen Identifikationsinformationen des zweiten Endgeräts umfassen;
wobei die Identifikationsinformationen des zweiten Endgeräts eine C-RNTI des zweiten Endgeräts umfassen.

3. Verfahren (200) nach Anspruch 1, wobei die ersten Informationen durch das erste Endgerät auf der Grundlage einer Angabe der Netzvorrichtung gesendet werden.

4. Verfahren (200) nach Anspruch 1, ferner umfassend:
Senden (S203), durch die Netzvorrichtung, von dritten Informationen an das erste Endgerät, wobei die dritten Informationen verwendet werden zum Herstellen, Modifizieren, Freigeben oder Wiederaufnehmen einer Relaisverbindung zwischen dem ersten Endgerät und der Netzvorrichtung;
wobei die dritten Informationen Identifikationsinformationen des zweiten Endgeräts umfassen und die Relaisverbindung eine Verbindung zwischen dem ersten Endgerät und dem zweiten Endgerät und eine Verbindung zwischen dem zweiten Endgerät und der Netzvorrichtung umfasst.

5. Verfahren (200) nach Anspruch 1, ferner umfassend:
Senden (S204), durch die Netzvorrichtung, von vierten Informationen an das zweite Endgerät, wobei die vierten Informationen verwendet werden zum Herstellen, Modifizieren, Freigeben oder Wiederaufnehmen einer Relaisverbindung zwischen dem ersten Endgerät und der Netzvorrichtung;
wobei die vierten Informationen zweite Konfigurationsinformationen umfassen, die verwendet werden zum Konfigurieren einer Übertragung, die über die Relaisverbindung zwischen dem ersten Endgerät und der Netzvorrichtung durchgeführt wird, und wobei die Relaisverbindung eine Verbindung zwischen dem ersten Endgerät und dem zweiten Endgerät und eine Verbindung zwischen dem zweiten Endgerät und der Netzvorrichtung umfasst;
wobei die zweiten Konfigurationsinformationen verwendet werden zum Konfigurieren eines Ziel-Uu-Funkverbindungsstreckensteuerkanals bzw. target Uu radio link control channels, Ziel-Uu-RLC-Kanals, wobei die Übertragung, die dem Ziel-Uu-RLC-Kanal entspricht, über die Relaisverbindung durchgeführt wird.

6. Drahtloskommunikationsverfahren (200), angewandt auf ein erstes Endgerät,
wobei das erste Endgerät und ein zweites Endgerät über eine erste Schnittstelle verbunden sind, wobei die erste Schnittstelle keine Schnittstelle ist, die durch ein Protokoll des 3. Generation Partnership Projects, 3GPP, definiert ist, wobei das zweite Endgerät und die Netzvorrichtung über eine durch das 3GPP-Protokoll definierte Schnittstelle verbunden sind und eine direkte Verbindung, definiert durch das 3GPP-Protokoll, zwischen dem ersten Endgerät und einer Netzvorrichtung hergestellt wurde; und das Verfahren Folgendes umfasst:
Senden (S201), durch das erste Endgerät, von ersten Informationen an die Netzvorrichtung, wobei die ersten Informationen Informationen sind, welche eine Verbindung zwischen dem ersten Endgerät und dem zweiten Endgerät betreffen, wobei Zielinformationen die ersten Informationen umfassen und die ersten Informationen von Endgeräteassistenzinformationen, UEAssistanceInformation, geführt werden.

7. Verfahren (200) nach Anspruch 6, wobei die ersten Informationen Identifikationsinformationen des zweiten Endgeräts umfassen;
wobei die Identifikationsinformationen des zweiten Endgeräts eine C-RNTI des zweiten Endgeräts umfassen.

8. Verfahren (200) nach Anspruch 6, wobei die ersten Informationen durch das erste Endgerät auf der Grundlage einer Angabe der Netzvorrichtung gesendet werden.

9. Verfahren (200) nach Anspruch 6, ferner umfassend:
Empfangen, durch das erste Endgerät, von dritten Informationen, die von der Netzvorrichtung gesendet wurden, wobei die dritten Informationen verwendet werden zum Herstellen, Modifizieren, Freigeben oder Wiederaufnehmen einer Relaisverbindung zwischen dem ersten Endgerät und der Netzvorrichtung;
wobei die dritten Informationen Identifikationsinformationen des zweiten Endgeräts umfassen und die Relaisverbindung eine Verbindung zwischen dem ersten Endgerät und dem zweiten Endgerät und eine Verbindung zwischen dem zweiten Endgerät und der Netzvorrichtung umfasst.

10. Netzvorrichtung (400), umfassend:
eine Verarbeitungseinheit (410), ausgelegt zum Erfassen von Zielinformationen von einem ersten Endgerät, wobei die Zielinformationen Informationen sind, die eine Verbindung zwischen dem ersten Endgerät und einem zweiten Endgerät betreffen;
wobei das erste Endgerät und das zweite Endgerät über eine erste Schnittstelle verbunden sind, wobei die erste Schnittstelle keine Schnittstelle ist, die durch ein Protokoll des 3. Generation Partnership Projects, 3GPP, definiert ist, wobei das zweite Endgerät und die Netzvorrichtung über eine durch das 3GPP-Protokoll definierte Schnittstelle verbunden sind und eine direkte Verbindung, definiert durch das 3GPP-Protokoll, zwischen dem ersten Endgerät und der Netzvorrichtung hergestellt wurde;
wobei die Verarbeitungseinheit (410) ausgelegt ist zum Steuern einer Kommunikationseinheit zum Empfangen von ersten Informationen, die durch das erste Endgerät gesendet wurden, wobei die ersten Informationen Informationen sind, welche die Verbindung zwischen dem ersten Endgerät und dem zweiten Endgerät betreffen;
wobei die Zielinformationen die ersten Informationen umfassen und die ersten Informationen von Endgeräteassistenzinformationen, UEAssistanceInformation, geführt werden.

11. Netzvorrichtung (400) nach Anspruch 10, wobei die Zielinformationen Identifikationsinformationen des zweiten Endgeräts umfassen;
wobei die Identifikationsinformationen des zweiten Endgeräts eine C-RNTI des zweiten Endgeräts umfassen.

12. Netzvorrichtung (400) nach Anspruch 10, wobei die ersten Informationen durch das erste Endgerät auf der Grundlage einer Angabe der Netzvorrichtung gesendet werden.

13. Endgerätevorrichtung (1000), wobei das Endgerät (1000) und ein zweites Endgerät über eine erste Schnittstelle verbunden sind, wobei die erste Schnittstelle keine Schnittstelle ist, die durch ein Protokoll des 3. Generation Partnership Projects, 3GPP, definiert ist, wobei das zweite Endgerät und eine Netzvorrichtung über eine durch das 3GPP-Protokoll definierte Schnittstelle verbunden sind und eine direkte Verbindung, definiert durch das 3GPP-Protokoll, zwischen dem ersten Endgerät und der Netzvorrichtung hergestellt wurde; und die Endgerätevorrichtung Folgendes umfasst:
eine Kommunikationseinheit (1010), ausgelegt zum Senden von ersten Informationen an die Netzvorrichtung, wobei die ersten Informationen Informationen sind, welche eine Verbindung zwischen der Endgerätevorrichtung und dem zweiten Endgerät betreffen, wobei Zielinformationen die ersten Informationen umfassen und die ersten Informationen von Endgeräteassistenzinformationen, UEAssistanceInformation, geführt werden.

14. Endgerätevorrichtung (1000) nach Anspruch 13, wobei die ersten Informationen Identifikationsinformationen des zweiten Endgeräts umfassen;
wobei die Identifikationsinformationen des zweiten Endgeräts eine C-RNTI des zweiten Endgeräts umfassen.

15. Endgerätevorrichtung (1000) nach Anspruch 13, wobei die ersten Informationen durch das erste Endgerät auf der Grundlage einer Angabe der Netzvorrichtung gesendet werden.

## Revendications

1. Procédé de communication sans fil (200) comprenant les étapes suivantes :
acquérir (S210), à l'aide d'un dispositif réseau, des informations cibles auprès d'un premier terminal, les informations cibles étant des informations relatives à une connexion entre le premier terminal et un deuxième terminal ;
où le premier terminal et le deuxième terminal sont connectés par l'intermédiaire d'une première interface, la première interface n'est pas une interface définie par un protocole 3GPP (3rd Generation Partnership Project), le deuxième terminal et le dispositif réseau sont connectés par l'intermédiaire d'une interface définie par le protocole 3GPP, et une connexion directe définie par le protocole 3GPP a été établie entre le premier terminal et le dispositif réseau ;
où l'acquisition (S210), par le dispositif réseau, des informations cibles auprès du premier terminal comprend :
la réception, par le dispositif réseau, des premières informations transmises par le premier terminal, les premières informations étant des informations relatives à la connexion entre le premier terminal et le deuxième terminal ;
où les informations cibles comprennent les premières informations, et les premières informations sont transportées par des informations d'assistance au terminal, UEAssistanceInformation.

2. Procédé (200) selon la revendication 1, dans lequel les informations cibles comprennent des informations d'identification du deuxième terminal ;
où les informations d'identification du deuxième terminal comprennent un C-RNTI du deuxième terminal.

3. Procédé (200) selon la revendication 1, dans lequel les premières informations sont transmises par le premier terminal sur la base d'une indication du dispositif réseau.

4. Procédé (200) selon la revendication 1, comprenant en outre l'étape suivante :
transmettre (S203), par le dispositif réseau, des troisièmes informations au premier terminal, les troisièmes informations étant utilisées pour établir, modifier, libérer ou reprendre une connexion relais entre le premier terminal et le dispositif réseau ;
où les troisièmes informations comprennent des informations d'identification du deuxième terminal, et la connexion relais comprend une connexion entre le premier terminal et le deuxième terminal et une connexion entre le deuxième terminal et le dispositif réseau.

5. Procédé (200) selon la revendication 1, comprenant en outre l'étape suivante :
transmettre (S204), par le dispositif réseau, des quatrièmes informations au deuxième terminal, où les quatrièmes informations sont utilisées pour établir, modifier, libérer ou reprendre une connexion relais entre le premier terminal et le dispositif réseau ;
où les quatrièmes informations comprennent des deuxièmes informations de configuration, qui sont utilisées pour configurer une transmission effectuée par l'intermédiaire de la connexion relais entre le premier terminal et le dispositif réseau, et la connexion relais comprend une connexion entre le premier terminal et le deuxième terminal et une connexion entre le deuxième terminal et le dispositif réseau ;
où les deuxièmes informations de configuration sont utilisées pour configurer un canal de contrôle de liaison radio, RLC, Uu cible où la transmission correspondant au canal RLC Uu cible est effectuée par l'intermédiaire de la connexion relais.

6. Procédé de communication sans fil (200), appliqué à un premier terminal, dans lequel le premier terminal et un deuxième terminal sont connectés par l'intermédiaire d'une première interface, la première interface n'est pas une interface définie par un protocole 3GPP (3rd Generation Partnership Project), le deuxième terminal et le dispositif réseau sont connectés par l'intermédiaire d'une interface définie par le protocole 3GPP, et une connexion directe définie par le protocole 3GPP a été établie entre le premier terminal et un dispositif réseau, et le procédé comprend l'étape suivante :
transmettre (S201), par le premier terminal, des premières informations au dispositif réseau, où les premières informations sont des informations relatives à une connexion entre le premier terminal et le deuxième terminal, les informations cibles comprennent les premières informations, et les premières informations sont transportées par des informations d'assistance au terminal, UEAssistanceInformation.

7. Procédé (200) selon la revendication 6, dans lequel les premières informations comprennent des informations d'identification du deuxième terminal ;
où les informations d'identification du deuxième terminal comprennent un C-RNTI du deuxième terminal.

8. Procédé (200) selon la revendication 6, dans lequel les premières informations sont transmises par le premier terminal sur la base d'une indication du dispositif réseau.

9. Procédé (200) selon la revendication 6, comprenant en outre l'étape suivante :
recevoir, par le premier terminal, des troisièmes informations transmises par le dispositif réseau, les troisièmes informations étant utilisées pour établir, modifier, libérer ou reprendre une connexion relais entre le premier terminal et le dispositif réseau ;
où les troisièmes informations comprennent des informations d'identification du deuxième terminal, et la connexion relais comprend une connexion entre le premier terminal et le deuxième terminal et une connexion entre le deuxième terminal et le dispositif réseau.

10. Dispositif réseau (400) comprenant :
une unité de traitement (410), configurée pour acquérir des informations cibles auprès d'un premier terminal, les informations cibles étant des informations relatives à une connexion entre le premier terminal et un deuxième terminal ;
où le premier terminal et le deuxième terminal sont connectés par l'intermédiaire d'une première interface, la première interface n'est pas une interface définie par un protocole 3GPP (3rd Generation Partnership Project), le deuxième terminal et le dispositif réseau sont connectés par l'intermédiaire d'une interface définie par le protocole 3GPP, et une connexion directe définie par le protocole 3GPP a été établie entre le premier terminal et le dispositif réseau ;
où l'unité de traitement (410) est configurée pour commander une unité de communication afin de recevoir des premières informations transmises par le premier terminal, les premières informations étant des informations relatives à la connexion entre le premier terminal et le deuxième terminal ;
où les informations cibles comprennent les premières informations, et les premières informations sont transportées par des informations d'assistance au terminal, UEAssistanceInformation.

11. Dispositif réseau (400) selon la revendication 10, dans lequel les informations cibles comprennent des informations d'identification du deuxième terminal ;
où les informations d'identification du deuxième terminal comprennent un C-RNTI du deuxième terminal.

12. Dispositif réseau (400) selon la revendication 10, dans lequel les premières informations sont transmises par le premier terminal sur la base d'une indication du dispositif réseau.

13. Dispositif terminal (1000), dans lequel le dispositif terminal (1000) et un deuxième terminal sont connectés par l'intermédiaire d'une première interface, la première interface n'est pas une interface définie par un protocole 3GPP (3rd Generation Partnership Project), le deuxième terminal et un dispositif réseau sont connectés par l'intermédiaire d'une interface définie par le protocole 3GPP, et une connexion directe définie par le protocole 3GPP a été établie entre le premier terminal et le dispositif réseau, et le dispositif terminal comprend :
une unité de communication (1010), configurée pour transmettre des premières informations au dispositif réseau, où les premières informations sont des informations relatives à une connexion entre le dispositif terminal et le deuxième terminal, les informations cibles comprennent les premières informations, et les premières informations sont transportées par des informations d'assistance au terminal, UEAssistanceInformation.

14. Dispositif terminal (1000) selon la revendication 13, dans lequel les premières informations comprennent des informations d'identification du deuxième terminal ; où les informations d'identification du deuxième terminal comprennent un C-RNTI du deuxième terminal.

15. Dispositif terminal (1000) selon la revendication 13, dans lequel les premières informations sont transmises par le premier terminal sur la base d'une indication du dispositif réseau.
